# EUROPEAN PATENT APPLICATION

(11) **EP 2 492 252 A2**
(43) Date of publication of application: **29.08.2012**
(21) Application number: 11008755.8
(22) Date of filing: 26.02.2010
(51) Int. Cl.: C03C 25/10, C01B 31/02, C22C 49/06, C22C 49/14, C03C 25/12

(54) **CNT-Infused glass fiber materials and process therefor**

(30) Priority: 27.02.2009 US 155935 P; 03.03.2009 US 157096 P; 10.04.2009 US 168516 P; 14.04.2009 US 169055 P; 29.05.2009 US 182153 P; 02.11.2009 US 611070
(62) Divisional of application: 10746942.1
(71) Applicant: Applied NanoStructured Solutions, LLC, Baltimore, MD 21220 (US)
(72) Inventor: Shah, Tushar K., Columbia, MD 21044 (US); Gardner, Slade H., Redwood City, CA 94061 (US); Alberding, Mark R., Glen Arm, MD 21057 (US); Malecki, Harry C., Abingdon, MD 21009 (US)
(74) Representative: Müller-Boré & Partner Patentanwälte

(57) **Abstract**

The present invention relates to a composition comprising a carbon nanotube (CNT)-infused glass fiber material, wherein said CNT-infused glass fiber material comprises a glass fiber material of spoolable dimensions and carbon nanotubes (CNTs) bonded to said glass fiber material, wherein said CNTs are uniform in length and uniform in distribution.

## Description

### CROSS-REFERENCE TO RELATED APPLICATIONS

This application is a continuation of U.S. patent application 12/611,070, filed November 2, 2009, which is a continuation-in-part of U.S. patent application 11/619,327 filed January 3, 2007. This application claims the benefit of priority under 35 U.S.C. §119 from U.S. Provisional Application Nos. 61/168,516, filed April, 10, 2009, 61/169,055 filed April 14, 2009, 61/155,935 filed February 27, 2009, 61/157,096 filed March 3, 2009, and 61/182,153 filed May 29, 2009, all of which are incorporated herein by reference in their entirety.

### STATEMENT REGARDING FEDERALLY SPONSORED RESEARCH OR DEVELOPMENT

Not applicable.

### FIELD OF THE INVENTION

The present invention relates to fiber materials, more specifically to glass fiber materials modified with carbon nanotubes.

### BACKGROUND OF THE INVENTION

Fiber materials are used for many different applications in a wide variety of industries, such as the commercial aviation, recreation, industrial and transportation industries. Commonly-used fiber materials for these and other applications include glass fiber, cellulosic fiber, carbon fiber, metal fiber, ceramic fiber and aramid fiber, for example.

Although glass fiber materials, in particular, are useful because of their high ratio of surface area to weight, their increased surface area makes them more susceptible to chemical attack. Humidity can also affect the tensile strength of glass fiber materials because absorbed moisture can worsen microscopic cracks and surface defects, and lessen their tenacity. As a consequence, commercially available spooled glass fiber materials are manufactured with fiber sizing that may require removal if modification of the glass fiber material is desired or when new sizing agents are to be employed. This adds to the process steps increasing the potential for damaging the glass fibers and filaments through exposure to moisture, abrasion, and the like.

Glass fiber materials are present in numerous composite materials. To realize the benefit of glass fiber properties in a composite, there should be a good interface between the fibers and the matrix. The sizing employed on a glass fiber can provide a physico-chemical link between fiber and the resin matrix and thus affects the mechanical and chemical properties of the composite. Sizing is particularly useful in providing the interface between hydrophilic glass fibers and dissimilar materials such as hydrophobic matrix materials.

However, most conventional sizing agents have a lower interfacial strength than the glass fiber material to which they are applied. As a consequence, the strength of the sizing and its ability to withstand interfacial stress ultimately determines the strength of the overall composite. Thus, using conventional sizing, the resulting composite will generally have a strength less than that of the glass fiber material.

It would be useful to develop sizing agents and processes of coating the same on glass fiber materials to address some of the issues described above as well as to impart desirable characteristics to the glass fiber materials. The present invention satisfies this need and provides related advantages as well.

### SUMMARY OF THE INVENTION

In some aspects, embodiments disclosed herein relate to a composition that includes a carbon nanotube (CNT)-infused glass fiber material. The CNT-infused glass fiber material includes a glass fiber material of spoolable dimensions and carbon nanotubes (CNTs) bonded to the glass fiber material. The CNTs are uniform in length and uniform in distribution.

In some aspects, embodiments disclosed herein relate to a continuous CNT infusion process that includes: (a) disposing a carbon-nanotube forming catalyst on a surface of a glass fiber material of spoolable dimensions; and b) synthesizing carbon nanotubes on the glass fiber material, thereby forming a carbon nanotube-infused glass fiber material. The continuous CNT infusion process can be characterized by a material residence time of between about 5 to 300 seconds in a CNT growth chamber.

In some aspects, embodiments disclosed herein relate to a continuous CNT infusion process that includes: (a) extruding a glass fiber material from a glass melt; (b) disposing a carbon-nanotube forming catalyst on a surface of the glass fiber material; and (c) synthesizing carbon nanotubes on the glass fiber material, thereby forming a carbon nanotube-infused glass fiber material.

In some aspects, embodiments disclosed herein relate to a process for continuous CNT infusion to a glass fiber material of spoolable dimensions that includes: a) removing sizing material from a glass fiber material; b) applying a carbon nanotube-forming catalyst to the glass fiber material after sizing removal; c) heating the fiber to at least 500 °C; and d) synthesizing carbon nanotubes on the glass fiber material.

### BRIEF DESCRIPTION OF THE DRAWINGS

Figure 1 shows a transmission electron microscope (TEM) image of multi-walled carbon nanotubes that were grown on an E-glass fiber material.

Figure 2 shows a scanning electron microscope (SEM) image demonstrating uniform density CNT growth within 10% on a roving of E-glass fibers.

Figure 3 shows a SEM image demonstrating radially aligned growth of uniform CNT of 10 micron length on an E-glass fiber.

Figure 4 shows a SEM image demonstrating uniform density CNT growth within 10% on a roving of S-glass fibers.

Figure 5 shows a SEM image demonstrating radially aligned growth of uniform CNT of 25 micron length on an S-glass fiber.

Figure 6 shows a SEM image demonstrating dense radially aligned growth of uniform short CNT of 5 micron length on an S-glass fiber.

Figure 7 shows a process for producing CNT-infused glass fiber material in accordance with the illustrative embodiment of the present invention.

Figure 8 shows how a glass fiber material can be infused with CNTs in a continuous process for applications requiring improved shear strength.

Figure 9 shows how a nascent glass fiber material can be infused with CNTs in a continuous process for applications requiring improved electrical and/or thermal conductivity.

Figure 10 shows the CNT-infusion of glass fiber in a continuous process for applications requiring improved tensile strength, where the system is interfaced with subsequent resin incorporation and winding process.

Figure 11 shows the effect of CNT-infusion on a S2 glass fiber shear stress. The baseline material is a sized S2 glass fiber, while the CNT-infused material is an unsized S2 glass fiber with 25 micron long CNTs infused to the fiber surface.

Figure 12 shows the effect of CNT-infusion on an S2-glass roving on tensile strength. The baseline material is a sized S2 glass fiber, while the CNT-infused material is an unsized S2 glass fiber with about 10 micron long CNTs infused to the fiber surface.

### DETAILED DESCRIPTION

The present disclosure is directed, in part, to carbon nanotube-infused ("CNT-infused") glass fiber materials. The infusion of CNTs to the glass fiber material can serve many functions including, for example, as a sizing agent to protect against damage from moisture and abrasion. A CNT-based sizing can also serve as an interface between hydrophilic glass and a hydrophobic matrix material in a composite. The CNTs can also serve as one of several sizing agents coating the glass fiber material.

Moreover, CNTs infused on a glass fiber material can alter various properties of the glass fiber material, such as thermal and/or electrical conductivity, and/or tensile strength, for example. The processes employed to make CNT-infused glass fiber materials provide CNTs with substantially uniform length and distribution to impart their useful properties uniformly over the glass fiber material that is being modified. Furthermore, the processes disclosed herein are suitable for the generation of CNT-infused glass fiber materials of spoolable dimensions.

The present disclosure is also directed, in part, to processes for making CNT-infused glass fiber materials. The processes disclosed herein can be applied to nascent glass fiber materials generated *de novo* before, or in lieu of, application of a typical sizing solution to the glass fiber material. Alternatively, the processes disclosed herein can utilize a commercial glass fiber material, for example, a glass roving that already has a sizing applied to its surface. In such embodiments, the sizing can be removed to provide a direct interface between the glass fiber material and the synthesized CNTs. After CNT synthesis further sizing agents can be applied to the glass fiber material as desired.

The processes described herein allow for the continuous production of carbon nanotubes of uniform length and distribution along spoolable lengths of tow, roving, tapes, fabrics and the like. While various mats, woven and non-woven fabrics and the like can be functionalized by processes of the invention, it is also possible to generate such higher ordered structures from the parent roving, tow, yarn or the like after CNT functionalization of these parent materials. For example, a CNT-infused chopped strand mat can be generated from a CNT-infused glass fiber roving.

In processes described herein, an exemplary CNT growth chamber that is 6 feet long and 750° C growth temperature, the CNT infusion process can occur with linespeeds of between about 1 ft/min to about 72 ft/min. In some embodiments, faster process linespeeds can be achieved by increasing overall CNT growth chamber length.

As used herein the term "glass fiber material" refers to any material which has glass fiber as its elementary structural component. The term encompasses fibers, filaments, yarns, tows, rovings, tapes, woven and non-woven fabrics, plies, mats, and the like.

As used herein the term "spoolable dimensions" refers to glass fiber materials having at least one dimension that is not limited in length, allowing for the material to be stored on a spool or mandrel. Glass fiber materials of "spoolable dimensions" have at least one dimension that indicates the use of either batch or continuous processing for CNT infusion as described herein. One glass fiber material of spoolable dimensions that is commercially available is exemplified by S-2 glass roving with a tex value of 675 (1 tex = 1 g/1,000m) or 735 yards/lb (AGY, Aiken, South Carolina). Commercial glass fiber rovings, in particular, can be obtained on 5, 10, 20, 50, and 100 1b. spools, for example. Processes of the invention operate readily with 5 to 20 1b. spools, although larger spools are usable. Moreover, a pre-process operation can be incorporated that divides very large spoolable lengths, for example 100 1b. or more, into easy to handle dimensions, such as two 50 1b spools.

As used herein, the term "carbon nanotube" (CNT, plural CNTs) refers to any of a number of cylindrically-shaped allotropes of carbon of the fullerene family including single-walled carbon nanotubes (SWNTs), double-walled carbon nanotubes (DWNTS), multi-walled carbon nanotubes (MWNTs). CNTs can be capped by a fullerene-like structure or open-ended. CNTs include those that encapsulate other materials.

As used herein "uniform in length" refers to length of CNTs grown in a reactor. "Uniform length" means that the CNTs have lengths with tolerances of plus or minus about 20% of the total CNT length or less, for CNT lengths varying from between about 1 micron to about 500 microns. At very short lengths, such as 1-4 microns, this error may be in a range from between about plus or minus 20% of the total CNT length up to about plus or minus 1 micron, that is, somewhat more than about 20% of the total CNT length. Although uniformity in CNT length can be obtained across the entirety of any length of spoolable glass fiber material, processes of the invention also allow the CNT length to vary in discrete sections of any portion of the spoolable material. Thus, for example, a spoolable length of glass fiber material can have uniform CNT lengths within any number of sections, each section having any desired CNT length. Such sections of different CNT length can appear in any order and can optionally include sections that are void of CNTs. Such control of CNT length is made possible by varying the linespeed of the process, the flow rates of the carrier and carbon feedstock gases, reaction temperatures, and material residence times. All these variables in the process can be automated and run by computer control.

As used herein "uniform in distribution" refers to the consistency of density of CNTs on a glass fiber material. "Uniform distribution" means that the CNTs have a density on the glass fiber material with tolerances of plus or minus about 10% coverage defined as the percentage of the surface area of the fiber covered by CNTs. This is equivalent to ±1500 CNTs/µm² for an 8 nm diameter CNT with 5 walls. Such a figure assumes the space inside the CNTs as fillable.

As used herein, the term "infused" means bonded and "infusion" means the process of bonding. Such bonding can involve direct covalent bonding, ionic bonding, pi-pi, and/or van der Waals force-mediated physisorption. Direct infusion of a CNT to a glass fiber can be the result of a growth mechanism in which a CNT nanoparticle catalyst resides at the tip of the leading edge of CNT growth. That is, in the final structure, the catalyst nanoparticle is distal to the glass fiber. Bonding can also be indirect, whereby CNTs are infused to the glass fiber via an intervening transition metal nanoparticle disposed between the CNTs and glass fiber material. In the CNT-infused glass fiber materials disclosed herein, the carbon nanotubes can be "infused" to the glass fiber material both directly and indirectly as described above. The manner in which a CNT is "infused" to a glass fiber material is referred to as a "bonding motif."

As used herein, the term "transition metal" refers to any element or alloy of elements in the d-block of the periodic table. The term "transition metal" also includes salt forms of the base transition metal element such as oxides, carbides, nitrides, and the like.

As used herein, the term "nanoparticle" or NP (plural NPs), or grammatical equivalents thereof refers to particles sized between about 0.1 to about 100 nanometers in equivalent spherical diameter, although the NPs need not be spherical in shape. Transition metal NPs, in particular, serve as catalysts for further CNT growth on the glass fiber materials.

As used herein, the term "sizing agent," "fiber sizing agent," or just "sizing," refers collectively to materials used in the manufacture of glass fibers as a coating to protect the integrity of glass fibers, provide enhanced interfacial interactions between a glass fiber and a matrix material in a composite, and/or alter and/or enhance particular physical properties of a glass fiber. In some embodiments, CNTs infused to glass fiber materials behave as a sizing agent.

As used herein, the term "matrix material" refers to a bulk material than can serve to organize sized CNT-infused glass fiber materials in particular orientations, including random orientation. The matrix material can benefit from the presence of the CNT-infused glass fiber material by imparting some aspects of the physical and/or chemical properties of the CNT-infused glass fiber material to the matrix material.

As used herein, the term "material residence time" refers to the amount of time a discrete point along a glass fiber material of spoolable dimensions is exposed to CNT growth conditions during CNT infusion processes described herein. This definition includes the residence time when employing multiple CNT growth chambers.

As used herein, the term "linespeed" refers to the speed at which a glass fiber material of spoolable dimensions can be fed through the CNT infusion processes described herein, where linespeed is a velocity determined by dividing CNT chamber(s) length by the material residence time.

In some embodiments, the present invention provides a composition that includes a carbon nanotube (CNT)-infused glass fiber material. The CNT-infused glass fiber material includes a glass fiber material of spoolable dimensions and carbon nanotubes (CNTs) bonded to the glass fiber material. The bonding to the glass fiber material can include a bonding motif such as direct bonding of the CNTs to the glass fiber material, such as would be observed in tip growth with a CNT catalyst that follows the leading edge of CNT synthesis, indirect bonding via a transition metal nanoparticle disposed between the CNTs and the glass fiber material, and mixtures thereof.

Without being bound by theory, the transition metal nanoparticles, which serve as a CNT-forming catalyst, can catalyze CNT growth by forming a CNT growth seed structure. The CNT-forming catalyst can "float" during CNT synthesis moving along the leading edge of CNT growth such that when CNT synthesis is complete, the CNT-forming catalyst resides at the CNT terminus distal to the glass fiber material. In such a case, the CNT structure is infused directly to the glass fiber material. Similarly, the CNT-forming catalyst can "float," but can appear in the middle of a completed CNT structure, which can be the result of a non-catalyzed, seeded growth rate exceeding the catalyzed growth rate. Nonetheless, the resulting CNT infusion occurs directly to the glass fiber material. Finally, the CNT-forming catalyst can remain at the base of the glass fiber material and infused to it. In such a case, the seed structure initially formed by the transition metal nanoparticle catalyst is sufficient for continued non-catalyzed CNT growth without a "floating" catalyst. One skilled in the art will recognize the value of a CNT-growth process that can control whether the catalyst "floats" or not. For example, when a catalyst is substantially all "floating" the CNT-forming transition metal catalyst can be optionally removed after CNT synthesis without affecting the infusion of the CNTs to the glass fiber material. Regardless of the nature of the actual bond that is formed between the carbon nanotubes and the glass fiber material, direct or indirect bonding of the infused CNT is robust and allows the CNT-infused glass fiber material to exhibit carbon nanotube properties and/or characteristics.

Compositions having CNT-infused glass fiber materials are provided in which the CNTs are substantially uniform in length. In the continuous process described herein, the residence time of the glass fiber material in a CNT growth chamber can be modulated to control CNT growth and ultimately, CNT length. This provides a means to control specific properties of the CNTs grown. CNT length can also be controlled through modulation of the carbon feedstock and carrier gas flow rates. Additional control of the CNT properties can be obtained by controlling, for example, the size of the catalyst used to prepare the CNTs. For example, 1 nm transition metal nanoparticle catalysts can be used to provide SWNTs in particular. Larger catalysts can be used to prepare predominantly MWNTs.

Additionally, the CNT growth processes employed are useful for providing a CNT-infused glass fiber material with uniformly distributed CNTs on glass fiber materials while avoiding bundling and/or aggregation of the CNTs that can occur in processes in which pre-formed CNTs are suspended or dispersed in a solvent solution and applied by hand to the glass fiber material. Such aggregated CNTs tend to adhere weakly to a glass fiber material and the characteristic CNT properties are weakly expressed, if at all. In some embodiments, the maximum distribution density, expressed as percent coverage, that is, the surface area of fiber covered, can be as high as about 55% assuming about 8 nm diameter CNTs with 5 walls. This coverage is calculated by considering the space inside the CNTs as being "fillable" space. Various distribution/density values can be achieved by varying catalyst dispersion on the surface as well as controlling gas composition and process speed. Typically for a given set of parameters, a percent coverage within about 10% can be achieved across a fiber surface. Higher density and shorter CNTs are useful for improving mechanical properties, while longer CNTs with lower density are useful for improving thermal and electrical properties, although increased density is still favorable. A lower density can result when longer CNTs are grown. This can be the result of the higher temperatures and more rapid growth causing lower catalyst particle yields.

The compositions of the invention having CNT-infused glass fiber materials can include a glass fiber material such as a glass filament, a glass strand (tow), a glass yarn, a glass roving, a glass tape, a glass fiber-braid, unidirectional fabrics and tapes, an optical fiber, a glass roving fabric, a non-woven glass fiber mat, and a glass fiber ply. Glass fibers are formed by extrusion of thin strands from a silica-based formulation with diameters generally suitable for textile-type processing. Glass filaments include high aspect ratio glass fibers having diameters ranging in size from between about 1 micron to about 50 microns. Glass strands or tows are generally compactly associated bundles of filaments and are usually twisted together to give yarns.

Yarns include closely associated bundles of twisted filaments or strands. Each filament diameter in a yarn is relatively uniform. Yarns have varying weights described by their 'tex,' expressed as weight in grams of 1000 linear meters, or denier, expressed as weight in pounds of 10,000 yards, with a typical tex range usually being between about 5 g to about 400 g.

Rovings include loosely associated bundles of untwisted filaments or strands. As in yarns, filament diameter in a roving is generally uniform. Rovings also have varying weights and the tex range is usually between about 300 g and about 4800 g. Where filaments are gathered together directly after the melting process, the resultant bundle is referred to as a direct roving. Several glass strands can also be brought together separately after manufacture of the glass, to provide an assembled roving. Assembled rovings usually have smaller filament diameters than direct rovings. This can provide the roving with better wet-out and mechanical properties.

Glass tapes (or wider sheets) are materials that can be drawn directly from a glass melt or assembled as weaves. Glass tapes can vary in width and are generally two-sided structures similar to ribbon. Processes of the present invention are compatible with CNT infusion on one or both sides of a tape. CNT-infused tapes can resemble a "carpet" or "forest" on a flat substrate surface. Again, processes of the invention can be performed in a continuous mode to functionalize spools of tape.

Glass fiber-braids represent rope-like structures of densely packed glass fibers. Such structures can be assembled from glass yarns, for example. Braided structures can include a hollow portion or a braided structure can be assembled about another core material.

An optical fiber is designed to carry light along its length. Light is kept in the core of the optical fiber by total internal reflection, which causes the fiber to act as a waveguide. In some embodiments, the optical fibers are multi-mode fibers (MMF), which can support many propagation paths or transverse modes. In other embodiments, the optical fibers are single-mode fibers (SMF). Multi-mode fibers generally have a larger core diameter, and are used for short-distance communication links and for applications where high power is transmitted. Single-mode fibers are used for most communication links longer than about 550 m, or about 1,800 feet.

In some embodiments a number of primary glass fiber material structures can be organized into fabric or sheet-like structures. These include, for example, glass roving fabric, non-woven glass fiber mat and glass fiber ply, in addition to the tapes described above. Such higher ordered structures can be assembled from parent tows, yarns, rovings, filaments or the like, with CNTs already infused in the parent fiber. Alternatively such structures can serve as the substrate for the CNT infusion processes described herein.

The glass-type used in the glass fiber material can be any type, including for example, E-glass, A-glass, E-CR-glass, C-glass, D-glass, R-glass, and S-glass. E-glass includes alumino-borosilicate glass with less than 1% by weight alkali oxides and is mainly used for glass-reinforced plastics. A-glass includes alkali-lime glass with little or no boron oxide. E-CR-glass includes alumino-lime silicate with less than 1% by weight alkali oxides and has high acid resistance. C-glass includes alkali-lime glass with high boron oxide content and is used, for example, for glass staple fibers. D-glass includes borosilicate glass and possesses a high dielectric constant. R-glass includes alumino silicate glass without MgO and CaO and possesses high mechanical strength. S-glass includes alumino silicate glass without CaO but with high MgO content and possesses high tensile strength. One or more of these glass types can be processed into the glass fiber materials described above. In particular embodiments, the glass is E-glass. In other embodiments, the glass is S-glass.

CNTs useful for infusion to glass fiber materials include single-walled CNTs, double-walled CNTs, multi-walled CNTs, and mixtures thereof. The exact CNTs to be used depends on the application of the CNT-infused glass fiber. CNTs can be used for thermal and/or electrical conductivity applications, or as insulators. In some embodiments, the infused carbon nanotubes are single-wall nanotubes. In some embodiments, the infused carbon nanotubes are multi-wall nanotubes. In some embodiments, the infused carbon nanotubes are a combination of single-wall and multi-wall nanotubes. There are some differences in the characteristic properties of single-wall and multi-wall nanotubes that, for some end uses of the fiber, dictate the synthesis of one or the other type of nanotube. For example, single-walled nanotubes can be semi-conducting or metallic, while multi-walled nanotubes are metallic.

CNTs lend their characteristic properties such as mechanical strength, low to moderate electrical resistivity, high thermal conductivity, and the like to the CNT-infused glass fiber material. For example, in some embodiments, the electrical resistivity of a carbon nanotube-infused glass fiber material is lower than the electrical resistivity of a parent glass fiber material. More generally, the extent to which the resulting CNT-infused fiber expresses these characteristics can be a function of the extent and density of coverage of the glass fiber by the carbon nanotubes. Any amount of the fiber surface area, from 0-55% of the fiber can be covered assuming an 8 nm diameter, 5-walled MWNT (again this calculation counts the space inside the CNTs as fillable). This number is lower for smaller diameter CNTs and more for greater diameter CNTs. 55% surface area coverage is equivalent to about 15,000 CNTs/micron². Further CNT properties can be imparted to the glass fiber material in a manner dependent on CNT length, as described above. Infused CNTs can vary in length ranging from between about 1 micron to about 500 microns, including 1 micron, 2 microns, 3 microns, 4 micron, 5, microns, 6, microns, 7 microns, 8 microns, 9 microns, 10 microns, 15 microns, 20 microns, 25 microns, 30 microns, 35 microns, 40 microns, 45 microns, 50 microns, 60 microns, 70 microns, 80 microns, 90 microns, 100 microns, 150 microns, 200 microns, 250 microns, 300 microns, 350 microns, 400 microns, 450 microns, 500 microns, and all values in between. CNTs can also be less than about 1 micron in length, including about 0.5 microns, for example. CNTs can also be greater than 500 microns, including for example, 510 microns, 520 microns, 550 microns, 600 microns, 700 microns and all values in between.

Compositions of the invention can incorporate CNTs have a length from about 1 micron to about 10 microns. Such CNT lengths can be useful in application to increase tensile strength. CNTs can also have a length from about 10 microns to about 100 microns. Such CNT lengths can be useful to increase electrical/thermal and mechanical properties. The process used in the invention can also provide CNTs having a length from about 100 microns to about 500 microns, which can also be beneficial to increase electrical and thermal properties. Such control of CNT length is readily achieved through modulation of carbon feedstock and inert gas flow rates coupled with varying linespeeds.

In some embodiments, compositions that include spoolable lengths of CNT-infused glass fiber materials can have various uniform regions with different lengths of CNTs. For example, it can be desirable to have a first portion of CNT-infused glass fiber material with uniformly shorter CNT lengths to enhance tensile strength properties, and a second portion of the same spoolable material with a uniform longer CNT length to enhance electrical or thermal properties.

Processes of the invention for CNT infusion to glass fiber materials allow control of the CNT lengths with uniformity and in a continuous process allowing spoolable glass fiber materials to be functionalized with CNTs at high rates. With material residence times between 5 to 300 seconds in a CNT growth chamber, linespeeds in a continuous process for a CNT growth chamber that is 3 feet long can be in a range anywhere from about 0.5 ft/min to about 36 ft/min and greater. The speed selected depends on various parameters as explained further below.

In some embodiments, a material residence time of about 5 to about 30 seconds can produce CNTs having a length between about 1 micron to about 10 microns. In some embodiments, a material residence time of about 30 to about 180 seconds can produce CNTs having a length between about 10 microns to about 100 microns. In still further embodiments, a material residence time of about 180 to about 300 seconds can produce CNTs having a length between about 100 microns to about 500 microns. One skilled in the art will recognize that these ranges are approximate and that CNT length can also be modulated by reaction temperatures, and carrier and carbon feedstock concentrations and flow rates.

The infused CNTs disclosed herein can effectively function as a replacement for conventional glass fiber "sizing." The infused CNTs are more robust than conventional sizing materials and can improve the fiber-to-matrix interface in composite materials and, more generally, improve fiber-to-fiber interfaces. Indeed, the CNT-infused glass fiber materials disclosed herein are themselves composite materials in the sense the CNT-infused glass fiber material properties will be a combination of those of the glass fiber material as well as those of the infused CNTs. Consequently, embodiments of the present invention provide a means to impart desired properties to a glass fiber material that otherwise lack such properties or possesses them in insufficient measure. Glass fiber materials can be tailored or engineered to meet the requirements of specific applications. The CNTs acting as sizing can protect glass fiber materials from absorbing moisture due to the hydrophobic CNT structure. Moreover, hydrophobic matrix materials, as further exemplified below, interact well with hydrophobic CNTs to provide improved fiber to matrix interactions.

Despite the beneficial properties imparted to a glass fiber material having infused CNTs described above, the compositions of the present invention can include further "conventional" sizing agents. Such sizing agents vary widely in type and function and include, for example, surfactants, anti-static agents, lubricants, siloxanes, alkoxysilanes, aminosilanes, silanes, silanols, polyvinyl alcohol, starch, and mixtures thereof. Such secondary sizing agents can be used to protect the CNTs themselves or provide further properties to the fiber not imparted by the presence of the infused CNTs.

Compositions of the present invention can further include a matrix material to form a composite with the CNT-infused glass fiber material. Such matrix materials can include, for example, an epoxy, a polyester, a vinylester, a polyetherimide, a polyetherketoneketone, a polyphthalamide, a polyetherketone, a polytheretherketone, a polyimide, a phenol-formaldehyde, and a bismaleimide. Matrix materials useful in the present invention can include any of the known matrix materials (see Mel M. Schwartz, Composite Materials Handbook (2d ed. 1992)). Matrix materials more generally can include resins (polymers), both thermosetting and thermoplastic, metals, ceramics, and cements.

Thermosetting resins useful as matrix materials include phthalic/maelic type polyesters, vinyl esters, epoxies, phenolics, cyanates, bismaleimides, and nadic end-capped polyimides (e.g., PMR-15). Thermoplastic resins include polysulfones, polyamides, polycarbonates, polyphenylene oxides, polysulfides, polyether ether ketones, polyether sulfones, polyamide-imides, polyetherimides, polyimides, polyarylates, and liquid crystalline polyester.

Metals useful as matrix materials include alloys of aluminum such as aluminum 6061, 2024, and 713 aluminum braze. Ceramics useful as matrix materials include glass ceramics, such as lithium aluminosilicate, oxides such as alumina and mullite, nitrides such as silicon nitride, and carbides such as silicon carbide. Cements useful as matrix materials include carbide-base cements (tungsten carbide; chromium carbide, and titanium carbide), refractory cements (tungsten-thoria and barium-carbonate-nickel), chromium-alumina, nickel-magnesia iron-zirconium carbide. Any of the above-described matrix materials can be used alone or in combination.

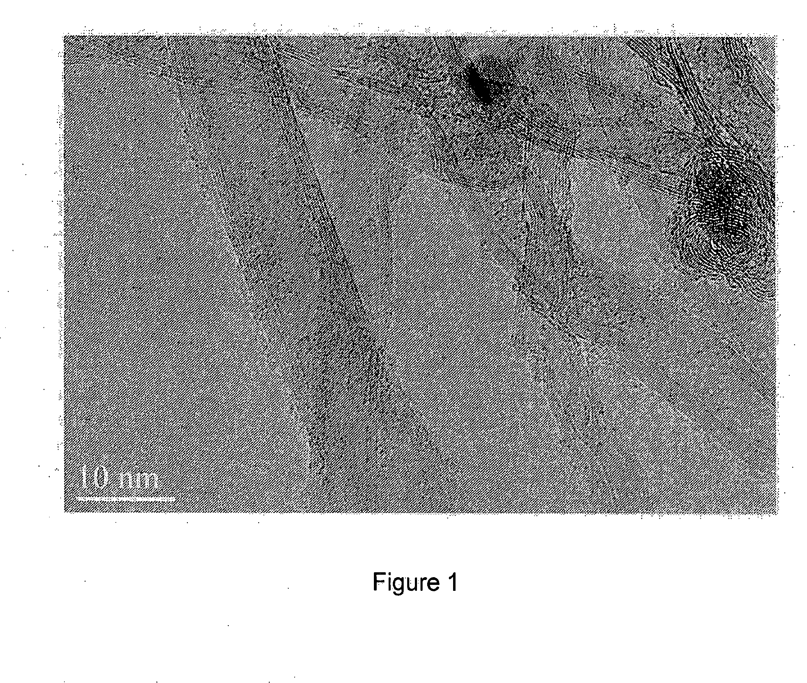

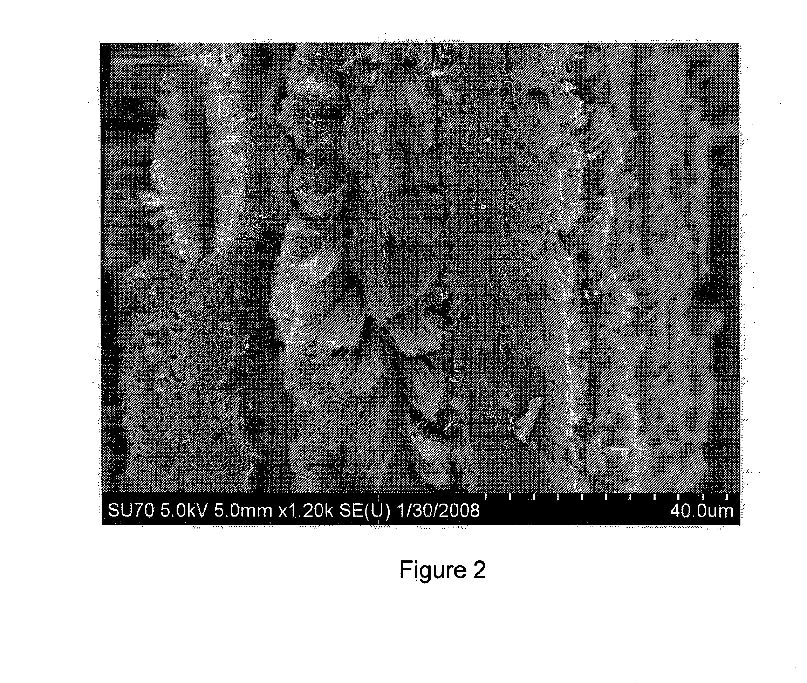

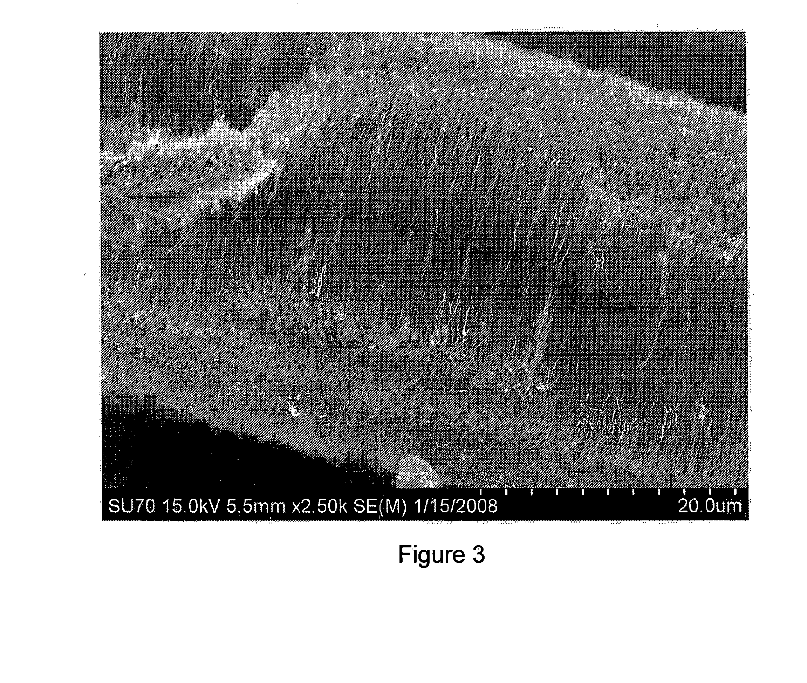

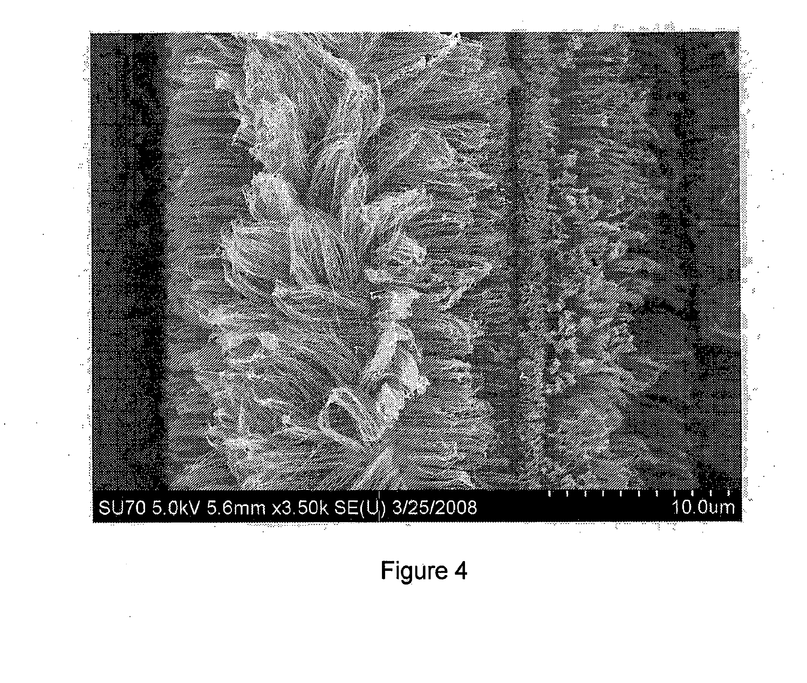

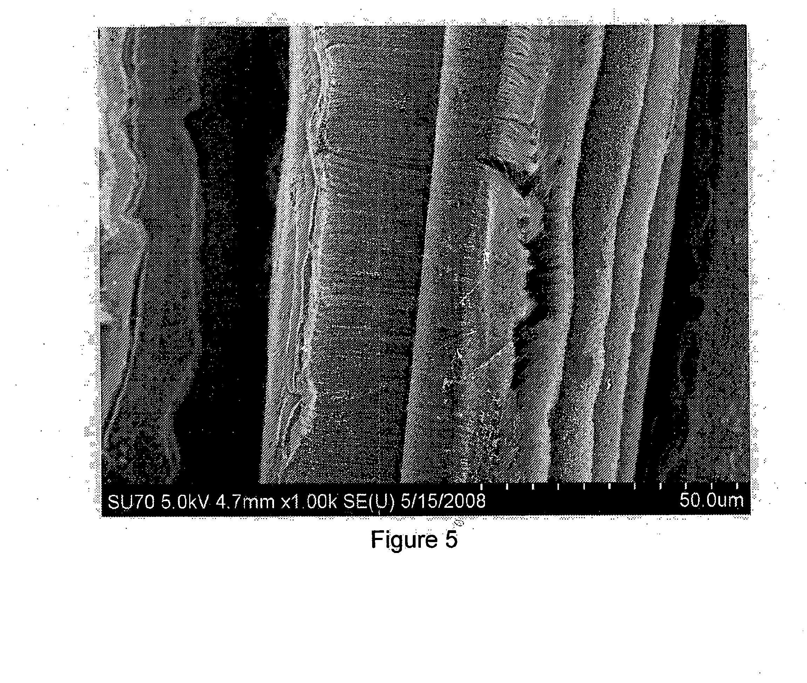

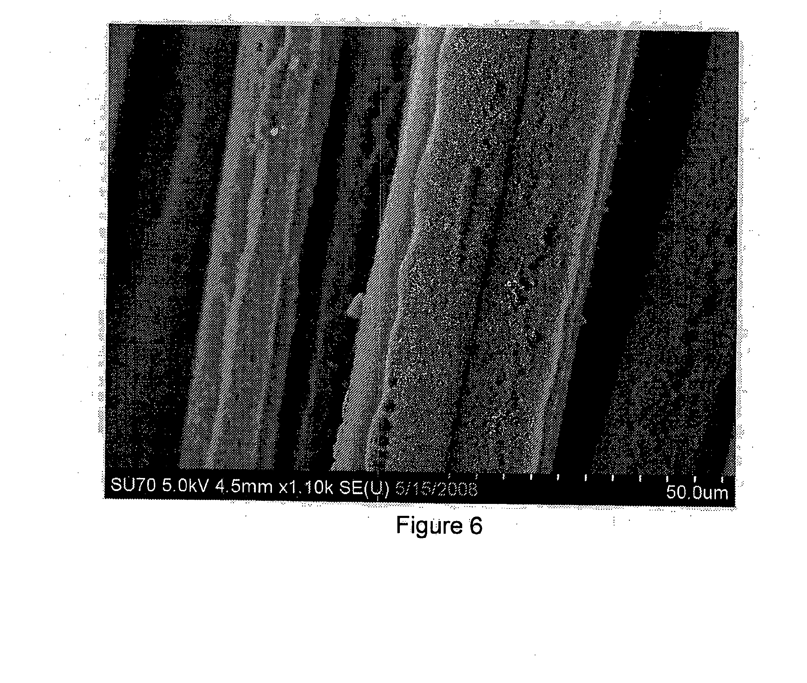

Figure 1-6 show TEM and SEM images of glass fiber materials prepared by the processes described herein. The procedures for preparing these materials are further detailed below and in Examples I-III. Figure 1 shows a transmission electron microscope (TEM) image of multi-walled carbon nanotubes that were grown on a E-glass fiber material. Figure 2 shows a scanning electron microscope (SEM) image demonstrating uniform density CNT growth within about10% on E-glass fibers. Figure 3 shows a SEM image demonstrating radially aligned growth of uniform CNT of about 10 micron length on an E-glass fiber. Figure 4 shows a SEM image demonstrating uniform density CNT growth within about 10% on S-glass fibers. Figure 5 shows a SEM image demonstrating radially aligned growth of uniform CNT of about 25 micron length on an S-glass fiber. Figure 6 shows a SEM image demonstrating radially aligned growth of uniform short CNT of about 5 micron length on an S-glass fiber.

CNT-infused glass fiber materials can be used in a myriad of applications. Where nonconducting-type single-walled carbon nanotubes are grown on glass fiber materials, the resultant CNT-infused glass fiber materials can be used in insulating applications. CNT-infused glass fibers can be used to reinforce pressure hoses, such as those used in automotive and drilling industries.

CNT infused glass fiber materials can be used in applications requiring wear-resistance. Such wear resistance applications can include, for example, rubber o-rings and gasket seals.

The large effective surface area of CNTs makes the CNT-infused glass fiber materials effective for water filtration applications and other extractive processes, such as separation of organic oils from water. CNT-infused glass fiber materials can be used to remove organic toxins from water tables, water storage facilities, or in-line filters for home and office use.

In oilfield technologies, the CNT-infused glass fibers are useful in the manufacture of drilling equipment, such as pipe bearings, piping reinforcement, and rubber o-rings. Furthermore, as described above, CNT-infused glass fibers can be used in extractive processes. Applying such extraction properties in a formation containing valuable petroleum deposits, the CNT-infused glass fiber materials can be used to extract oil from otherwise intractable formations. For example, the CNT-infuse glass fiber materials can be used to extract oil from formations where substantial water and/or sand is present. The CNT-infused glass fiber material can also be useful to extract heavier oils that would otherwise be difficult to extract due to their high boiling points. In conjunction with a perforated piping system, for example, the wicking of such heavy oils by CNT-infused glass materials overcoated on the perforated piping can be operatively coupled to a vacuum system, or the like, to continuously remove high boiling fractions from heavy oil and oil shale formations. Moreover, such processes can be used in conjunction with, or in lieu, of conventional thermal or catalyzed cracking methods, known in the art.

CNT-infused glass fiber materials can enhance structural elements in aerospace and ballistics applications. For example, the structures such as nose cones in missiles, leading edge of wings, primary structural parts, such as flaps and aerofoils, propellers and air brakes, small plane fuselages, helicopter shells and rotor blades, aircraft secondary structural parts, such as floors, doors, seats, air conditioners, and secondary tanks and airplane motor parts can benefit from the structural enhancement provided by CNT-infused glass fibers. Structural enhancement in many other applications can include, for example, mine sweeper hulls, helmets, radomes, rocket nozzles, rescue stretchers, and engine components. In building and construction, structural enhancement of exterior features include columns, pediments, domes, cornices, and formwork. Likewise, in interior building structures such as blinds, sanitary-ware, window profiles, and the like can all benefit from the use of CNT-infused glass fiber materials.

In maritime industry, structural enhancement can include boat hulls, stringers, and decks. CNT-infused glass fiber materials can also be used in the heavy transportation industry in large panels for trailer walls, floor panels for railcars, truck cabs, exterior body molding, bus body shells, and cargo containers, for example. In automotive applications, CNT-infused glass fiber materials can be used in interior parts, such as trimming, seats, and instrument panels. Exterior structures such as body panels, openings, underbody, and front and rear modules can all benefit from the use of CNT-infused glass fiber materials. Even automotive engine compartment and fuel mechanical area parts, such as axles and suspensions, fuel and exhaust systems, and electrical and electronic components can all utilize CNT-infused glass fiber materials.

Other applications of CNT-infused glass fiber materials include, bridge construction, reinforced concrete products, such as dowel bars, reinforcing bars, post-tensioning and pre-stressing tendons, stay-in-place framework, electric power transmission and distribution structures such as utility poles, transmission poles, and cross-arms, highway safety and roadside features such as sign supports, guardrails, posts and supports, noise barriers, and in municipal pipes and storage tanks.

CNT-infused glass fiber materials can also be used in a variety of leisure equipment such as water and snow skis, kayaks, canoes and paddles, snowboards, golf club shafts, golf trolleys, fishing rods, and swimming pools. Other consumer goods and business equipment include gears, pans, housings, gas pressure bottles, components for household appliances, such as washers, washing machine drums, dryers, waste disposal units, air conditioners and humidifiers.

The electrical properties of CNT-infused glass fibers also can impact various energy and electrical applications. For example, CNT-infused glass fiber materials can be used in wind turbine blades, solar structures, electronic enclosures, such as laptops, cell phones, computer cabinets, where such CNT-infused materials can be used in EMI shielding, for example. Other applications include powerlines, cooling devices, light poles, circuit boards, electrical junction boxes, ladder rails, optical fiber, power built into structures such as data lines, computer terminal housings, and business equipment, such as copiers, cash registers and mailing equipment.

In some embodiments the present invention provides a continuous process for CNT infusion that includes (a) disposing a carbon nanotube-forming catalyst on a surface of a glass fiber material of spoolable dimensions; and (b) synthesizing carbon nanotubes directly on the glass fiber material, thereby forming a carbon nanotube-infused glass fiber material. The continuous CNT infusion process can have a material residence time of between about 5 to about 300 seconds in a CNT growth chamber.

In some embodiments, a material residence time of about 5 to about 30 seconds can produce CNTs having a length between about 1 micron to about 10 microns. In some embodiments, a material residence time of about 30 to about 180 seconds can produce CNTs having a length between about 10 microns to about 100 microns. In still further embodiments, a material residence time of about 180 to about 300 seconds can produce CNTs having a length between about 100 microns to about 500 microns.

Thus, in a 9 foot long CNT growth chamber, with materials residence times from ranging from between about 5 to about 300 seconds, the linespeed of the process can be in a range from between about 1.5 ft/min to about 108 ft/min. The linespeeds achieved by the process described herein allow the formation of commercially relevant quantities of CNT-infused glass fiber materials with short production times. For example, at 36 ft/min linespeed, the quantities of CNT-infused glass fibers (over 5% infused CNTs on fiber by weight) can exceed over 100 pound or more of material produced per day in a system that is designed to simultaneously process 5 separate rovings (20 lb/ roving). Systems can be made to produce more rovings at once or at faster speeds by repeating growth zones. Moreover, some steps in the fabrication of CNTs, as known in the art, have prohibitively slow rates preventing a continuous mode of operation. For example, in a typical process known in the art, a CNT-forming catalyst reduction step can take 1-12 hours to perform. The process described herein overcomes such rate limiting steps.

The CNT-infused glass fiber material-forming processes of the invention can avoid CNT entanglement that occurs when trying to apply suspensions of pra-formed carbon nanotubes to fiber materials. That is, because pre-formed CNTs are not fused to the glass fiber material, the CNTs tend to bundle and entangle. The result is a poorly uniform distribution of CNTs that weakly adhere to the glass fiber material. However, processes of the present invention can provide, if desired, a highly uniform entangled CNT mat on the surface of the glass fiber material by reducing the growth density. The CNTs grown at low density are infused in the glass fiber material first. In such embodiments, the fibers do not grow dense enough to induce vertical alignment. The result is entangled mats on the glass fiber material surfaces. By contrast, manual application of pre-formed CNTs does not insure uniform distribution and density of a CNT mat on the glass fiber material.

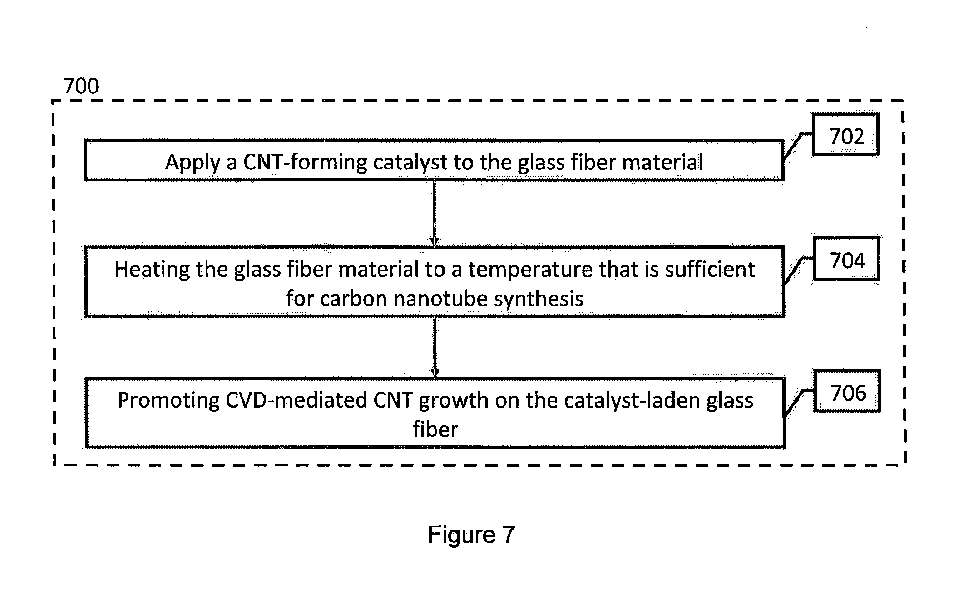

Figure 7 depicts a flow diagram of process **700** for producing CNT-infused glass fiber material in accordance with an illustrative embodiment of the present invention.

Process **700** includes at least the operations of:

**702**: Applying a CNT-forming catalyst to the glass fiber material.

**704**: Heating the glass fiber material to a temperature that is sufficient for carbon nanotube synthesis.

**706**: Promoting CVD-mediated CNT growth on the catalyst-laden glass fiber.

To infuse carbon nanotubes into a glass fiber material, the carbon nanotubes are synthesized directly on the glass fiber material. In the illustrative embodiment, this is accomplished by first disposing nanotube-forming catalyst on the glass fiber, as per operation 702.

Preceding catalyst deposition, the glass fiber material can be optionally treated with plasma to prepare the surface to accept the catalyst. For example, a plasma treated glass fiber material can provide a roughened glass fiber surface in which the CNT-forming catalyst can be deposited. In some embodiments, the plasma also serves as to "clean" the fiber surface. The plasma process for "roughing" the surface of the glass fiber materials thus facilitates catalyst deposition. The roughness is typically on the scale of nanometers. In the plasma treatment process craters or depressions are formed that are nanometers deep and nanometers in diameter. Such surface modification can be achieved using a plasma of any one or more of a variety of different gases, including, without limitation, argon, helium, oxygen, ammonia, nitrogen and hydrogen.

Another optional step prior to or concomitant with deposition of the CNT-form catalyst is application of a barrier coating to the glass fiber material. Such a coating can include for example an alkoxysilane, an alumoxane, alumina nanoparticles, spin on glass and glass nanoparticles. This CNT-forming catalyst can be added to the uncured barrier coating material and then applied to the glass fiber material together, in one embodiment. In other embodiments the barrier coating material can be added to the glass fiber material prior to deposition of the CNT-forming catalyst. In such embodiments, the barrier coating can be partially cured prior to catalyst deposition. The barrier coating material should be of a thickness sufficiently thin to allow exposure of the CNT-forming catalyst to the carbon feedstock for subsequent CVD growth. In some embodiments, the thickness is less than or about equal to the effective diameter of the CNT-forming catalyst. Once the CNT-forming catalyst and barrier coating are in place, the barrier coating can be fully cured.

Without being bound by theory, the barrier coating can serve as an intermediate layer between the glass fiber material and the CNTs and serves to mechanically infuse the CNTs to the glass fiber material. Such mechanical infusion still provides a robust system in which the glass fiber material still serves as a platform for organizing the CNTs and the benefits of mechanical infusion with a barrier coating are similar to the indirect type fusion described herein above. Moreover, the benefit of including a barrier coating is the immediate protection it provides the glass fiber material from chemical damage due to exposure to moisture and/or any thermal damage due to heating of the glass fiber material at the temperatures used to promote CNT growth.

As described further below and in conjunction with Figure 7, the catalyst is prepared as a liquid solution that contains CNT-forming catalyst that comprise transition metal nanoparticles. The diameters of the synthesized nanotubes are related to the size of the metal particles as described above.

With reference to the illustrative embodiment of Figure 7, carbon nanotube synthesis is shown based on a chemical vapor deposition (CVD) process and occurs at elevated temperatures. The specific temperature is a function of catalyst choice, but will typically be in a range of about 500 to 1000 °C. Accordingly, operation **704** involves heating the glass fiber material to a temperature in the aforementioned range to support carbon nanotube synthesis.

In operation **706**, CVD-promoted nanotube growth on the catalyst-laden glass fiber material is then performed. The CVD process can be promoted by, for example, a carbon-containing feedstock gas such as acetylene, ethylene, and/or ethanol. The CNT synthesis processes generally use an inert gas (nitrogen, argon, helium) as a primary carrier gas. The carbon feedstock is provided in a range from between about 0% to about 15% of the total mixture. A substantially inert environment for CVD growth is prepared by removal of moisture and oxygen from the growth chamber.

In the CNT synthesis process, CNTs grow at the sites of a CNT-forming transition metal nanoparticle catalyst. The presence of the strong plasma-creating electric field can be optionally employed to affect nanotube growth. That is, the growth tends to follow the direction of the electric field. By properly adjusting the geometry of the plasma spray and electric field, vertically-aligned CNTs (*i.e.*, perpendicular to the glass fiber material) can be synthesized. Under certain conditions, even in the absence of a plasma, closely-spaced nanotubes will maintain a vertical growth direction resulting in a dense array of CNTs resembling a carpet or forest.

The operation of disposing a catalyst on the glass fiber material can be accomplished by spraying or dip coating a solution or by gas phase deposition via, for example, a plasma process. Thus, in some embodiments, after forming a solution of a catalyst in a solvent, catalyst can be applied by spraying or dip coating the glass fiber material with the solution, or combinations of spraying and dip coating. Either technique, used alone or in combination, can be employed once, twice, thrice, four times, up to any number of times to provide a glass fiber material that is sufficiently uniformly coated with CNT-forming catalyst. When dip coating is employed, for example, a glass fiber material can be placed in a first dip bath for a first residence time in the first dip bath. When employing a second dip bath, the glass fiber material can be placed in the second dip bath for a second residence time. For example, glass fiber materials can be subjected to a solution of CNT-forming catalyst for between about 3 seconds to about 90 seconds depending on the dip configuration and linespeed. Employing spraying or dip coating processes, a glass fiber material with a surface density of catalyst of less than about 5% surface coverage to as high as about 80% coverage, in which the CNT-forming catalyst nanoparticles are nearly monolayer. In some embodiments, the process of coating the CNT-forming catalyst on the glass fiber material should produce no more than a monolayer. For example, CNT growth on a stack of CNT-forming catalyst can erode the degree of infusion of the CNT to the glass fiber material. In other embodiments, the transition metal catalyst can be deposited on the glass fiber material using evaporation techniques, electrolytic deposition techniques, and other processes known to those skilled in the art, such as addition of the transition metal catalyst to a plasma feedstock gas as a metal organic, metal salt or other composition promoting gas phase transport.

Because processes of the invention are designed to be continuous, a spoolable glass fiber material can be dip-coated in a series of baths where dip coating baths are spatially separated. In a continuous process in which nascent glass fibers are being generated *de novo,* dip bath or spraying of CNT-forming catalyst can be the first step after sufficiently cooling the newly formed glass fiber material. Thus, application of a CNT-forming catalyst can be performed in lieu of application of a sizing. In other embodiments, the CNT-forming catalyst can be applied to newly formed glass fibers in the presence of other sizing agents. Such simultaneous application of CNT-forming catalyst and other sizing agents can still provide the CNT-forming catalyst in surface contact with the glass fiber material to insure CNT infusion. In yet further embodiments, the CNT-forming catalyst can be applied to nascent fibers by spray or dip coating while the glass fiber material is still sufficiently softened, for example, near or below the annealing temperature, such that CNT-forming catalyst is slightly embedded in the surface of the glass fibers. When depositing the CNT-forming catalyst on such hot glass fiber materials, care should be given to not exceed the melting point of the CNT-forming catalyst causing the fusion of nanoparticles resulting in loss of control of the CNT characteristics, such as CNT diameter, for example.

The catalyst solution employed can be a transition metal nanoparticle which can be any d-block transition metal as described above. In addition, the nanoparticles can include alloys and non-alloy mixtures of d-block metals in elemental form or in salt form, and mixtures thereof. Such salt forms include, without limitation, oxides, carbides, and nitrides. Non-limiting exemplary transition metal NPs include Ni, Fe, Co, Mo, Cu, Pt, Au, and Ag and salts thereof and mixtures thereof. In some embodiments, such CNT-forming catalysts are disposed on the glass fiber by applying or infusing a CNT-forming catalyst directly to the glass fiber material. Many of these transition metal catalysts are readily commercially available from a variety of suppliers, including, for example, Ferrotec Corporation (Bedford, NH).

Catalyst solutions used for applying the CNT-forming catalyst to the glass fiber material can be in any common solvent that allows the CNT-forming catalyst to be uniformly dispersed throughout. Such solvents can include, without limitation, water, acetone, hexane, isopropyl alcohol, toluene, ethanol, methanol, tetrahydrofuran (THF), cyclohexane or any other solvent with controlled polarity to create an appropriate dispersion of the CNT-forming catalyst nanoparticles. Concentrations of CNT-forming catalyst can be in a range from about 1:1 to 1:10000 catalyst to solvent.

In some embodiments, after applying the CNT-forming catalyst to the glass fiber material, the glass fiber material can be heated to a softening temperature. This can aid in embedding the CNT-forming catalyst in the surface of the glass fiber material and can encourage seeded growth without catalyst "floating." In some embodiments heating of the glass fiber material after disposing the catalyst on the glass fiber material can be at a temperature that is between about 500 °C and 1000 °C. Heating to such temperatures, which can be used for CNT growth, can serve to remove any pre-existing sizing agents on the glass fiber material allowing deposition of the CNT-forming catalyst without prior removal of pre-existing sizing. In such embodiments, the CNT-forming catalyst may be on the surface of the sizing coating prior to heating, but after sizing removal *is* in surface contact with the glass fiber material. Heating at these temperatures can be performed prior to or substantially simultaneously with introduction of a carbon feedstock for CNT growth.

In some embodiments, the present invention provides a process that includes removing sizing agents from a glass fiber material, applying a CNT-forming catalyst to the glass fiber material after sizing removal, heating the glass fiber material to at least 500 °C, and synthesizing carbon nanotubes on the glass fiber material. In some embodiments, operations of the CNT-infusion process include removing sizing from a glass fiber material, applying a CNT-forming catalyst to the glass fiber, heating the fiber to CNT-synthesis temperature and spraying carbon plasma onto the catalyst-laden glass fiber material. Thus, where commercial glass fiber materials are employed, processes for constructing CNT-infused glass fibers can include a discrete step of removing sizing from the glass fiber material before disposing the catalyst on the glass fiber material. Depending on the commercial sizing present, if it is not removed, then the CNT-forming catalyst may not be in surface contact with the glass fiber material, and this can prevent CNT fusion. In some embodiments, where sizing removal is assured under the CNT synthesis conditions, sizing removal can be performed *after* catalyst deposition but just prior to providing carbon feedstock.

The step of synthesizing carbon nanotubes can include numerous techniques for forming carbon nanotubes, including those disclosed in co-pending U.S. Patent Application No. US 2004/0245088 which is incorporated herein by reference. The CNTs grown on fibers of the present invention can be accomplished by techniques known in the art including, without limitation, micro-cavity, thermal or plasma-enhanced CVD techniques, laser ablation, arc discharge, and high pressure carbon monoxide (HiPCO). During CVD, in particular, a sized glass fiber material with CNT-forming catalyst disposed thereon, can be used directly. In some embodiments, any conventional sizing agents can be removed during CNT synthesis. In other embodiments other sizing agents are not removed, but do not hinder CNT synthesis and infusion to the glass fiber material due to the diffusion of the carbon source through the sizing. In some embodiments, acetylene gas is ionized to create a jet of cold carbon plasma for CNT synthesis. The plasma is directed toward the catalyst-bearing glass fiber material. Thus, in some embodiments synthesizing CNTs on a glass fiber material includes (a) forming a carbon plasma; and (b) directing the carbon plasma onto the catalyst disposed on the glass fiber material. The diameters of the CNTs that are grown are dictated by the size of the CNT-forming catalyst as described above. In some embodiments, the sized fiber substrate is heated to between about 550 to about 800 °C to facilitate CNT synthesis. To initiate the growth of CNTs, two gases are bled into the reactor: a process gas such as argon, helium, or nitrogen, and a carbon-containing gas, such as acetylene, ethylene, ethanol or methane. CNTs grow at the sites of the CNT-forming catalyst.

In some embodiments, the CVD growth is plasma-enhanced. A plasma can be generated by providing an electric field during the growth process. CNTs grown under these conditions can follow the direction of the electric field. Thus, by adjusting the geometry of the reactor vertically aligned carbon nanotubes can be grown radially about a cylindrical fiber. In some embodiments, a plasma is not required for radial growth about the fiber. For glass fiber materials that have distinct sides such as tapes, mats, fabrics, plies, and the like, catalyst can be disposed on one or both sides and correspondingly, CNTs can be grown on one or both sides as well.

As described above, CNT-synthesis is performed at a rate sufficient to provide a continuous process for functionalizing spoolable glass fiber materials. Numerous apparatus configurations faciliate such continuous synthesis as exemplified below.

In some embodiments, CNT-infused glass fiber materials can be constructed in an "all plasma" process. In such embodiments, glass fiber materials pass through numerous plasma-mediated steps to form the final CNT-infused product. The first of the plasma processes, can include a step of fiber surface modification. This is a plasma process for "roughing" the surface of the glass fiber material to facilitate catalyst deposition, as described above. As described above, surface modification can be achieved using a plasma of any one or more of a variety of different gases, including, without limitation, argon, helium, oxygen, ammonia, hydrogen, and nitrogen.

After surface modification, the glass fiber material proceeds to catalyst application. This is a plasma process for depositing the CNT-forming catalyst on the fibers. The CNT-forming catalyst is typically a transition metal as described above. The transition metal catalyst can be added to a plasma feedstock gas as a precursor in the form of a ferrofluid, a metal organic, metal salt or other composition for promoting gas phase transport. The catalyst can be applied at room temperature in the ambient environment with neither vacuum nor an inert atmosphere being required. In some embodiments, the glass fiber material is cooled prior to catalyst application.

Continuing the all-plasma process, carbon nanotube synthesis occurs in a CNT-growth reactor. This can be achieved through the use of plasma-enhanced chemical vapor deposition, wherein carbon plasma is sprayed onto the catalyst-laden fibers. Since carbon nanotube growth occurs at elevated temperatures (typically in a range of about 500 to 1000°C depending on the catalyst), the catalyst-laden fibers can be heated prior to exposing to the carbon plasma. For the infusion process, the glass fiber material can be optionally heated until it softens. After heating, the glass fiber material is ready to receive the carbon plasma. The carbon plasma is generated, for example, by passing a carbon containing gas such as acetylene, ethylene, ethanol, and the like, through an electric field that is capable of ionizing the gas. This cold carbon plasma is directed, via spray nozzles, to the glass fiber material. The glass fiber material can be in close proximity to the spray nozzles, such as within about 1 centimeter of the spray nozzles, to receive the plasma. In some embodiments, heaters are disposed above the glass fiber material at the plasma sprayers to maintain the elevated temperature of the glass fiber material.

Another configuration for continuous carbon nanotube synthesis involves a special rectangular reactor for the synthesis and growth of carbon nanotubes directly on glass fiber materials. The reactor can be designed for use in a continuous in-line process for producing carbon-nanotube bearing fibers. In some embodiments, CNTs are grown via a chemical vapor deposition ("CVD") process at atmospheric pressure and at elevated temperature in the range of about 550 °C to about 800 °C in a multi-zone reactor. The fact that the synthesis occurs at atmospheric pressure is one factor that facilitates the incorporation of the reactor into a continuous processing line for CNT-on-fiber synthesis. Another advantage consistent with in-line continuous processing using such a zone reactor is that CNT growth occurs in a seconds, as opposed to minutes (or longer) as in other procedures and apparatus configurations typical in the art.

CNT synthesis reactors in accordance with the various embodiments include the following features:

Rectangular Configured Synthesis Reactors: The cross section of a typical CNT synthesis reactor known in the art is circular. There are a number of reasons for this including, for example, historical reasons (cylindrical reactors are often used in laboratories) and convenience (flow dynamics are easy to model in cylindrical reactors, heater systems readily accept circular tubes (quartz, *etc.*), and ease of manufacturing. Departing from the cylindrical convention, the present invention provides a CNT synthesis reactor having a rectangular cross section. The reasons for the departure are as follows: **1.** Since many glass fiber materials that can be processed by the reactor are relatively planar such as flat tape or sheet-like in form, a circular cross section is an inefficient use of the reactor volume. This inefficiency results in several drawbacks for cylindrical CNT synthesis reactors including, for example, a) maintaining a sufficient system purge; increased reactor volume requires increased gas flow rates to maintain the same level of gas purge. This results in a system that is inefficient for high volume production of CNTs in an open environment; b) increased carbon feedstock gas flow; the relative increase in inert gas flow, as per a) above, requires increased carbon feedstock gas flows. Consider that the volume of a 12K glass fiber roving is 2000 times less than the total volume of a synthesis reactor having a rectangular cross section. In an equivalent growth cylindrical reactor (*i.e.*, a cylindrical reactor that has a width that accommodates the same planarized glass fiber material as the rectangular cross-section reactor), the volume of the glass fiber material is 17,500 times less than the volume of the chamber. Although gas deposition processes, such as CVD, are typically governed by pressure and temperature alone, volume has a significant impact on the *efficiency* of deposition. With a rectangular reactor there is a still excess volume. This excess volume facilitates unwanted reactions; yet a cylindrical reactor has about eight times *that* volume. Due to this greater opportunity for competing reactions to occur, the desired reactions effectively occur more slowly in a cylindrical reactor chamber. Such a slow down in CNT growth, is problematic for the development of a continuous process. One benefit of a rectangular reactor configuration is that the reactor volume can be decreased by using a small height for the rectangular chamber to make this volume ratio better and reactions more efficient. In some embodiments of the present invention, the total volume of a rectangular synthesis reactor is no more than about 3000 times greater than the total volume of a glass fiber material being passed through the synthesis reactor. In some further embodiments, the total volume of the rectangular synthesis reactor is no more than about 4000 times greater than the total volume of the glass fiber material being passed through the synthesis reactor. In some still further embodiments, the total volume of the rectangular synthesis reactor is less than about 10,000 times greater than the total volume of the glass fiber material being passed through the synthesis reactor. Additionally, it is notable that when using a cylindrical reactor, more carbon feedstock gas is required to provide the same flow percent as compared to reactors having a rectangular cross section. It should be appreciated that in some other embodiments, the synthesis reactor has a cross section that is described by polygonal forms that are not rectangular, but are relatively similar thereto and provide a similar reduction in reactor volume relative to a reactor having a circular cross section; c) problematic temperature distribution; when a relatively small-diameter reactor is used, the temperature gradient from the center of the chamber to the walls thereof is minimal. But with increased size, such as would be used for commercial-scale production, the temperature gradient increases. Such temperature gradients result in product quality variations across a glass fiber material substrate (*i*.*e.*, product quality varies as a function of radial position). This problem is substantially avoided when using a reactor having a rectangular cross section. In particular, when a planar substrate is used, reactor height can be maintained constant as the size of the substrate scales upward. Temperature gradients between the top and bottom of the reactor are essentially negligible and, as a consequence, thermal issues and the product-quality variations that result are avoided. **2.** Gas introduction: Because tubular furnaces are normally employed in the art, typical CNT synthesis reactors introduce gas at one end and draw it through the reactor to the other end. In some embodiments disclosed herein, gas can be introduced at the *center* of the reactor or within a target growth zone, symmetrically, either through the sides or through the top and bottom plates of the reactor. This improves the overall CNT growth rate because the incoming feedstock gas is continuously replenishing at the hottest portion of the system, which is where CNT growth is most active. This constant gas replenishment is an important aspect to the increased growth rate exhibited by the rectangular CNT reactors.

Zoning. Chambers that provide a relatively cool purge zone depend from both ends of the rectangular synthesis reactor. Applicants have determined that if hot gas were to mix with the external environment (*i.e.*, outside of the reactor), there would be an increase in degradation of the glass fiber material. The cool purge zones provide a buffer between the internal system and external environments. Typical CNT synthesis reactor configurations known in the art typically require that the substrate is carefully (and slowly) cooled. The cool purge zone at the exit of the present rectangular CNT growth reactor achieves the cooling in a short period of time, as required for the continuous in-line processing.

Non-contact, hot-walled, metallic reactor. In some embodiments, a hot-walled reactor is made of metal is employed, in particular stainless steel. This may appear counterintuitive because metal, and stainless steel in particular, is more susceptible to carbon deposition (*i.e.*, soot and by-product formation). Thus, most CNT reactor configurations use quartz reactors because there is less carbon deposited, quartz is easier to clean, and quartz facilitates sample observation. However, Applicants have observed that the increased soot and carbon deposition on stainless steel results in more consistent, faster, more efficient, and more stable CNT growth. Without being bound by theory it has been indicated that, in conjunction with atmospheric operation, the CVD process occurring in the reactor is diffusion limited. That is, the catalyst is "overfed;" too much carbon is available in the reactor system due to its relatively higher partial pressure (than if the reactor was operating under partial vacuum). As a consequence, in an open system - especially a clean one - too much carbon can adhere to catalyst particles, compromising their ability to synthesize CNTs. In some embodiments, the rectangular reactor is *intentionally* run when the reactor is "dirty," that is with soot deposited on the metallic reactor walls. Once carbon deposits to a monolayer on the walls of the reactor, carbon will readily deposit over itself. Since some of the available carbon is "withdrawn" due to this mechanism, the remaining carbon feedstock, in the form of radicals, react with the catalyst at a rate that does not poison the catalyst. Existing systems run "cleanly" which, if they were open for continuous processing, would produced a much lower yield of CNTs at reduced growth rates.

Although it is generally beneficial to perform CNT synthesis "dirty" as described above, certain portions of the apparatus, such as gas manifolds and inlets, can nonetheless negatively impact the CNT growth process when soot created blockages. In order to combat this problem, such areas of the CNT growth reaction chamber can be protected with soot inhibiting coatings such as silica, alumina, or MgO. In practice, these portions of the apparatus can be dip-coated in these soot inhibiting coatings. Metals such as INVAR® can be used with these coatings as INVAR has a similar CTE (coefficient of thermal expansion) ensuring proper adhesion of the coating at higher temperatures, preventing the soot from significantly building up in critical zones.

Combined Catalyst Reduction and CNT Synthesis. In the CNT synthesis reactor disclosed herein, both catalyst reduction and CNT growth occur within the reactor. This is significant because the reduction step cannot be accomplished timely enough for use in a continuous process if performed as a discrete operation. In a typical process known in the art, a reduction step typically takes 1-12 hours to perform. Both operations occur in a reactor in accordance with the present invention due, at least in part, to the fact that carbon feedstock gas is introduced at the center of the reactor, not the end as would be typical in the art using cylindrical reactors. The reduction process occurs as the fibers enter the heated zone; by this point, the gas has had time to react with the walls and cool off prior to reacting with the catalyst and causing the oxidation reduction (via hydrogen radical interactions). It is this transition region where the reduction occurs. At the hottest isothermal zone in the system, the CNT growth occurs, with the greatest growth rate occurring proximal to the gas inlets near the center of the reactor.

In some embodiments, when loosely affiliated glass fiber materials, such as glass roving are employed, the continuous process can include steps that spread out the strands and/or filaments of the roving. Thus, as a roving is unspooled it can be spread using a vacuum-based fiber spreading system, for example. When employing sized glass fibers, which can be relatively stiff, additional heating can be employed in order to "soften" the roving to facilitate fiber spreading. The spread fibers which comprise individual filaments can be spread apart sufficiently to expose an entire surface area of the filaments, thus allowing the roving to more efficiently react in subsequent process steps. For example, the spread glass roving can pass through a surface treatment step that is composed of a plasma system as described above. The roughened, spread fibers then can pass through a CNT-forming catalyst dip bath. The result is fibers of the glass roving that have catalyst particles distributed radially on their surface. The catalyzed-laden fibers of the roving then enter an appropriate CNT growth chamber, such as the rectangular chamber described above, where a flow through atmospheric pressure CVD or PE-CVD process is used to synthesize the CNTs at rates as high as several microns per second. The fibers of the roving, now withradially aligned CNTs, exit the CNT growth reactor.

In some embodiments, CNT-infused glass fiber materials can pass through yet another treatment process that, in some embodiments is a plasma process used to functionalize the CNTs. Additional functionalization of CNTs can be used to promote their adhesion to particular resins. Thus, in some embodiments, the present invention provides CNT-infused glass fiber materials having functionalized CNTs.

As part of the continuous processing of spoolable glass fiber materials, the a CNT-infused glass fiber material can further pass through a sizing dip bath to apply any additional sizing agents which can be beneficial in a final product. Finally if wet winding is desired, the CNT-infused glass fiber materials can be passed through a resin bath and wound on a mandrel or spool. The resulting glass fiber material/resin combination locks the CNTs on the glass fiber material allowing for easier handling and composite fabrication. In some embodiments, CNT infusion is used to provide improved filament winding. Thus, CNTs formed on glass fibers such as glass roving, are passed through a resin bath to produce resin-impregnated, CNT-infused glass roving. After resin impregnation, the glass roving can be positioned on the surface of a rotating mandrel by a delivery head. The roving can then be wound onto the mandrel in a precise geometric pattern in known fashion.

The winding process described above provides pipes, tubes, or other forms as are characteristically produced via a male mold. But the forms made from the winding process disclosed herein differ from those produced via conventional filament winding processes. Specifically, in the process disclosed herein, the forms are made from composite materials that include CNT-infused roving. Such forms will therefore benefit from enhanced strength and the like, as provided by the CNT-infused roving.

In some embodiments, a continuous process for infusion of CNTs on spoolable glass fiber materials can achieve a linespeed between about 0.5 ft/min to about 18 ft/min. In some embodiments, where the system is 3 feet long and operating at a 750° C growth temperature, the process can be run with a linespeed of about 6 ft/min to about 36 ft/min to produce, for example, CNTs having a length between about 1 micron to about 10 microns. The process can also be run with a linespeed of about 1 ft/min to about 6 ft/min to produce, for example, CNTs having a length between about 10 microns to about 100 microns. The process can be run with a linespeed of about 0.5 ft/min to about 1 ft/min to produce, for example, CNTs having a length between about 100 microns to about 200 microns. The CNT length is not tied only to linespeed and growth temperature, however, the flow rate of both the carbon feedstock and the inert carrier gases can also influence CNT length. For example, a flow rate consisting of less than 1% carbon feedstock in inert gas at high linespeeds (6 ft/min to 36 ft/min) can provide CNTs having a length between 1 micron to about 5 microns. A flow rate consisting of more than about 1% carbon feedstock in inert gas at high linespeeds (6 ft/min to 36 ft/min) can provide CNTs having length between 5 microns to about 10 microns.

In some embodiments, more than one glass material can be run simultaneously through the process. For example, multiple tapes rovings, filaments, strand and the like can be run through the process in parallel. Thus, any number of pre-fabricated spools of glass fiber material can be run in parallel through the process and re-spooled at the end of the process. The number of spooled glass fiber materials that can be run in parallel can include one, two, three, four, five, six, up to any number that can be accommodated by the width of the CNT-growth reaction chamber. Moreover, when multiple glass fiber materials are run through the process, the number of collection spools can be less than the number of spools at the start of the process. In such embodiments, glass strands, rovings, or the like can be sent through a further process of combining such glass fiber materials into higher ordered glass fiber materials such as woven fabrics or the like. The continuous process can also incorporate a post processing chopper that facilitates the formation CNT-infused chopped fiber mats, for example.

In some embodiments, the present invention provides a continuous CNT infusion process that includes: (a) extruding a glass fiber material from a glass melt; (b) disposing a carbon-nanotube forming catalyst on a surface of the glass fiber material; and (c) synthesizing carbon nanotubes on the glass fiber material, thereby forming a carbon nanotube-infused glass fiber material. Such a process allows for the direct application of carbon nanotubes to glass fiber materials as they are being produced. Because the carbon nanotubes provide the protection of a conventional sizing, there is no need to add further sizing agents unless desired. Moreover, unlike convention sizing, the carbon nanotubes impart beneficial tensile strength and other properties to the newly formed glass fiber material. The process is compatible with a variety of extruded glass fiber materials such as a glass filament, a glass strand, a glass roving or a glass tape.

The continuous CNT infusion process incorporating the inline operation of extrusion of the glass material can have a linespeed of between about 100 to about 1800 ft/min depending on the target infused CNT morphology and system length. One skilled in the art will appreciate that the lines speed can vary depending on the type of glass fiber material being extruded. In some embodiments, the linespeed of a process that incorporates an inline glass extrusion can be in a range from between about 25 to about 100 ft/min or greater, where the CNT growth chamber is sized accordingly to provide an adequate material residence time for a specified CNT growth length and density.

The operation of disposing the CNT-forming catalyst on the glass fiber material from the extrusion process can be carried out in line and the catalyst applied by spraying or dip coating the glass fiber material as described above. In some embodiments, the CNT-forming catalyst can be applied while the glass fiber material is still soft allowing it to be secured to the glass fiber material by slightly embedding it within the glass structure. In some embodiments, the steps of glass fiber material extrusion and carbon nanotube-forming catalyst deposition can be combined by incorporating the catalyst into the glass melt and then extruding the glass melt with the CNT-forming catalyst disposed throughout the glass fiber material, including CNT-forming catalyst exposed at the surface of the glass fiber material.

The step of synthesizing carbon nanotubes can be carried out as described above, including the operational steps of forming a carbon plasma and directing the carbon plasma onto the CNT-forming catalyst disposed on the glass fiber material. After formation of the CNT-fused glass fiber material additional sizing can be applied. Again this can be accomplished inline as part of the continuous process. In lieu of applying a sizing, or in addition to applying a sizing a matrix material can be applied to carbon nanotube-infused glass fiber material as well. Finally, the process can optionally include winding the carbon nanotube-infused glass fiber material about a mandrel after applying the matrix material.

In some embodiments, processes of the invention allow for synthesizing a first amount of a first type of carbon nanotube on the glass fiber material, in which the first type of carbon nanotube is selected to alter at least one first property of the glass fiber material. Subsequently, processes of the invention allow for synthesizing a second amount of a second type of carbon nanotube on the glass fiber material, in which the second type of carbon nanotube is selected to alter at least one second property of the glass fiber material.

In some embodiments, the first amount and second amount of CNTs are different. This can be accompanied by a change in the CNT type or not. Thus, varying the density of CNTs can be used to alter the properties of the original glass fiber material, even if the CNT type remains unchanged. CNT type can include CNT length and the number of walls, for example. In some embodiments the first amount and the second amount are the same. If different properties are desirable in this case, along the two different stretches of the spoolable material, then the CNT type can be changed, such as the CNT length. For example, longer CNTs can be useful in electrical/thermal applications, while shorter CNTs can be useful in mechanical strengthening applications.

In light of the aforementioned discussion regarding altering the properties of the carbon fiber materials, the first type of carbon nanotube and the second type of carbon nanotube can be the same, in some embodiments, while the first type of carbon nanotube and the second type of carbon nanotube can be different, in other embodiments. Likewise, the first property and the second property can be the same, in some embodiments. For example, the EMI shielding property can be the property of interest addressed by the first amount and type of CNTs and the 2nd amount and type of CNTs, but the degree of change in this property can be different, as reflected by differing amounts, and/or types of CNTs employed. Finally, in some embodiments, the first property and the second property can be different. Again this may reflect a change in CNT type. For example the first property can be mechanical strength with shorter CNTs, while the second property can be electrical/thermal properties with longer CNTs. One skilled in the art will recognize the ability to tailor the properties of the glass fiber material through the use of different CNT densities, CNT lengths, and the number of walls in the CNTs, such as single-walled, double-walled, and multi-walled, for example.

In some embodiments, processes of the present invention provides synthesizing a first amount of carbon nanotubes on a glass fiber material, such that this first amount allows the carbon nanotube-infused glass fiber material to exhibit a second group of properties that differ from a first group of properties exhibited by the glass fiber material itself. That is, selecting an amount that can alter one or more properties of the glass fiber material, such as tensile strength. The first group of properties and second group of properties can include at least one of the same properties, thus representing enhancing an already existing property of the glass fiber material. In some embodiments, CNT infusion can impart a second group of properties to the carbon nanotube-infused glass fiber material that is not included among the first group of properties exhibited by the glass fiber material itself.

In some embodiments, a first amount of carbon nanotubes is selected such that the value of at least one property selected from the group consisting of tensile strength, Young's Modulus, density, electrical conductivity, and thermal conductivity of the carbon nanotube-infused glass fiber material differs from the value of the same property of the glass fiber material itself.

Tensile strength can include three different measurements: 1) Yield strength which evaluates the stress at which material strain changes from elastic deformation to plastic deformation, causing the material to deform permanently; 2) Ultimate strength which evaluates the maximum stress a material can withstand when subjected to tension, compression or shearing; and 3) Breaking strength which evaluates the stress coordinate on a stress-strain curve at the point of rupture. Composite shear strength evaluates the stress at which a material fails when a load is applied perpendicular to the fiber direction. Compression strength evaluates the stress at which a material fails when a compressive load is applied. Table 1 below shows ultimate strength measurements for individual components of the invention, CNTs and exemplary glass fiber types E-glass and S-glass.

**Table 1.**

| **Material** 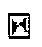 | **Ultimate strength Density** | |
|---|---|---|
| | **(MPa)** | **(g/cm³)** |
| E-Glass | 3,450 | 2.57 |
| S-Glass | 4,710 | 2.48 |
| Carbon nanotube | 62,000 | 1.34 |

Note the substantially greater strength of carbon nanotubes compared to the glass materials. Multiwalled carbon nanotubes, in particular, have the highest tensile strength of any material yet measured, with a tensile strength of 63 GPa having been achieved. Moreover, theoretical calculations have indicated possible tensile strengths of CNTs of about 300 GPa. Thus, CNT-infused glass fiber materials, are expected to have substantially higher ultimate strength compared to the parent glass fiber material. As described above, the increase in tensile strength will depend on the exact nature of the CNTs used as well as the density and distribution on the glass fiber material. CNT-infused glass fiber materials can exhibit a doubling in tensile properties, for example. Exemplary CNT-infused glass fiber materials can have as high as three times the shear strength as the parent unfunctionalized glass fiber material and as high as 2.5 times the compression strength.

Young's modulus is a measure of the stiffness of an isotropic elastic material. It is defined as the ratio of the uniaxial stress over the uniaxial strain in the range of stress in which Hooke's Law holds. This can be experimentally determined from the slope of a stress-strain curve created during tensile tests conducted on a sample of the material.

Electrical conductivity or specific conductance is a measure of a material's ability to conduct an electric current. CNTs with particular structural parameters such as the degree of twist, which relates to CNT chirality, can be highly conducting, thus exhibiting metallic properties. A recognized system of nomenclature (M. S. Dresselhaus, et al. Science of Fullerenes and Carbon Nanotubes, Academic Press, San Diego, CA pp. 756-760, (1996)) has been formalized and is recognized by those skilled in the art with respect to CNT chirality. Thus, for example, CNTs are distinguished from each other by a double index (n,m) where n and m are integers that describe the cut and wrapping of hexagonal graphite so that it makes a tube when it is wrapped onto the surface of a cylinder and the edges are sealed together.
When the two indices are the same, m=n, the resultant tube is said to be of the "arm-chair" (or n,n) type, since when the tube is cut perpendicular to the CNT axis only the sides of the hexagons are exposed and their pattern around the periphery of the tube edge resembles the arm and seat of an arm chair repeated n times. Arm-chair CNTs, in particular SWNTs, are metallic, and have extremely high electrical and thermal conductivity. In addition, such SWNTs have-extremely high tensile strength.

In addition to the degree of twist CNT diameter also effects electrical conductivity. As described above, CNT diameter can be controlled by use of controlled size CNT-forming catalyst nanoparticles. CNTs can also be formed as semi-conducting materials. Conductivity in multi-walled CNTs (MWNTs) can be more complex. Interwall reactions within MWNTs can redistribute current over individual tubes non-uniformly. By contrast, there is no change in current across different parts of metallic single-walled nanotubes (SWNTs). Carbon nanotubes also have very high thermal conductivity, comparable to diamond crystal and in-plane graphite sheet.

As indicated above in Table 1, CNTs have a density lower than exemplary glasses such as E-glass and S-glass. Thus, the CNT-infused glass fiber materials can benefit from the presence of CNTs not only in the properties described above, but can also provide lighter materials in the process. Thus, such lower density and higher strength materials translates to greater strength to weight ratio. It is understood that modifications which do not substantially affect the activity of the various embodiments of this invention are also included within the definition of the invention provided herein. Accordingly, the following examples are intended to illustrate but not limit the present invention.

### EXAMPLE I

This example shows how a glass fiber material can be infused with CNTs in a continuous process for applications requiring improved shear strength. In this case, a high density array of shorter CNTs is desirable.

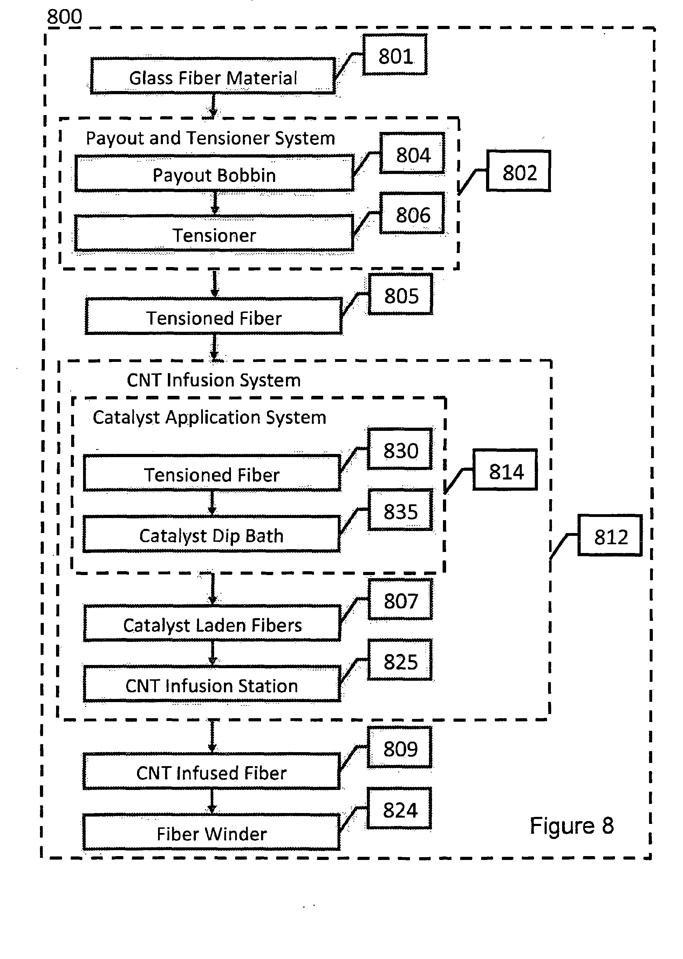

Figure 8 depicts system **800** for producing CNT-infused fiber in accordance with the illustrative embodiment of the present invention. System **800** includes a glass fiber material payout and tensioner system **802**, CNT-infusion system **812,** and fiber winder **824,** interrelated as shown.

Payout and tension system **802** includes payout bobbin **804** and tensioner **806.** The payout bobbin holds fiber spools and delivers glass fiber material **801** to the process at a linespeed of 9 ft/min; the fiber tension is maintained within 1-5 1bs via tensioner **806.** Payout and tension station **802** is routinely used in the fiber industry; those skilled in the art will be familiar with their design and use.

Tensioned fiber **805** is delivered to CNT-infusion system **812.** Station **812** includes catalyst application system **814** and micro-cavity CVD based CNT infusion station 825.

In this illustrative example, the catalyst solution is applied via a dip process, such as by passing tensioned fiber **830** through a dip bath **835.** In this example, a catalyst solution consisting of a volumetric ratio of 1 part ferrofluid nanoparticle solution and 100 parts hexane is used. At the process linespeed for CNT-infused fiber targeted at improving ILSS, the fiber will remain in the dip bath for 10 seconds. The catalyst can be applied at room temperature in the ambient environment with neither vacuum nor an inert atmosphere required.

Catalyst laden glass fiber **807** is then advanced to the CNT infusion station **825** consisting of a pre-growth cool inert gas purge zone, a CNT growth zone, and a post-growth gas purge zone. Room temperature nitrogen gas is introduced to the pre-growth purge zone in order to cool exiting gas from the CNT growth zone as described above. The exiting gas is cooled to below 250° C via the rapid nitrogen purge to prevent fiber oxidation. Fibers enter the CNT growth zone where elevated temperatures heat a mixture of 97.7% mass flow inert gas (nitrogen) and 2.3% mass flow carbon containing feedstock gas (acetylene) which is introduced centrally via a gas manifold. In this example the length of the system is 3 feet long and the temperature in the CNT growth zone is 750° C. Catalyst laden fibers are exposed to the CNT growth environment for 20 seconds in this example, resulting in 5 micron long with a 4% volume percentage CNTs infused to the glass fiber surface. The CNT-infused glass fibers finally pass through the post-growth purge zone which at 250°C cools the fiber as well as the exiting gas to prevent oxidation to the fiber surface and CNTs.

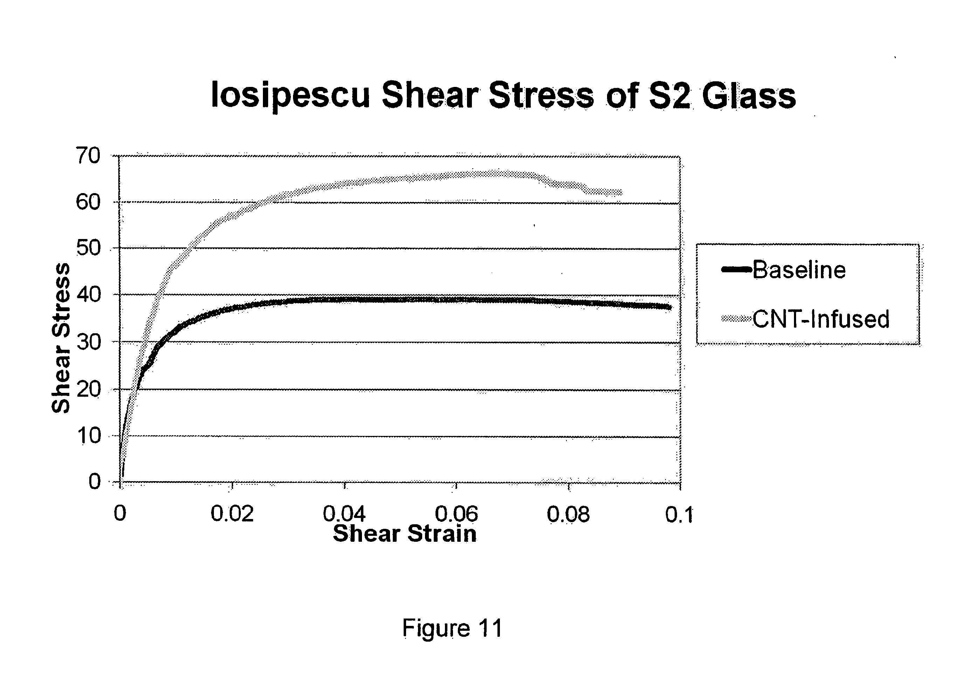

CNT-infused fiber **809** is collected on fiber winder **824** and then ready for use in any of a variety of applications which require improved shear strength, including, for example, use as the reinforcing material in composite materials. Figure 11 shows the effect of the presence of CNTs on the shear strength. The unsized CNT-infused S2-glass fiber demonstrates an over 65% improvement in shear strength over the sized S2-glass fiber baseline.

### EXAMPLE II

This example shows how a nascent glass fiber material can be infused with CNTs in a continuous process for applications requiring improved electrical and/or thermal conductivity. In this case, the maximum loading of long CNTs is targeted.

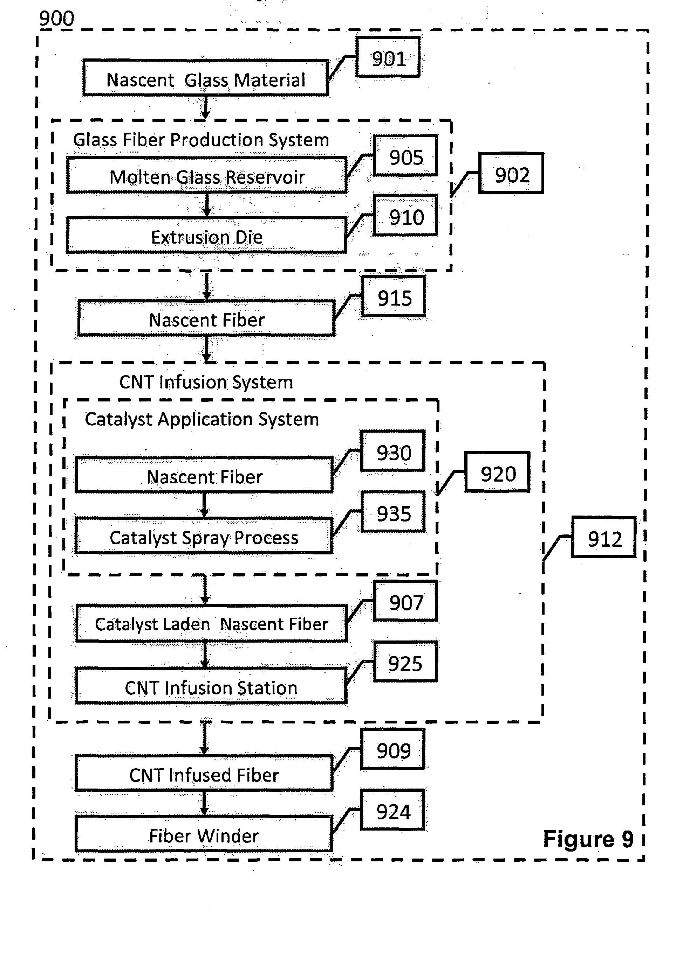

Figure 9 depicts system **900** for producing CNT-infused fiber in accordance with the illustrative embodiment of the present invention. System **900** includes a glass fiber production system **902,** CNT-infusion system **912,** and fiber winder **924,** interrelated as shown.

Glass fiber production system includes a molten glass reservoir **905** and a extrusion die **910** used to draw nascent glass material **901** to a 15 micron diameter. In this example, an E-glass fiber is extruded at a rate of 1 ft/min.

Nascent fiber **915** is delivered to CNT-infusion system **912.** CNT-infusion system **912** includes catalyst application system **920** and micro-cavity CVD based CNT infusion station **925.**

In this illustrative example, the catalyst solution is applied via a spray process **935,** where a nebulizer is used to apply an atomized catalyst spray to the nascent fiber **930.** In this example, a catalyst solution consisting of a 50 millimolar solution of iron nitrate in isopropyl alcohol. At the process linespeed for CNT-infused fiber targeted at improving electrical and/or thermal conductivity, the fiber will remain in the catalyst cloud created by a series of nebulizers for 30 seconds. The catalyst can be applied at room temperature in the ambient environment with neither vacuum nor an inert atmosphere required.

Catalyst laden nascent glass fiber **907** is then advanced to the CNT Infusion station **912** consisting of a pre-growth cool inert gas purge zone, a CNT growth zone, and a post-growth gas purge zone. Room temperature nitrogen gas is introduced to the pre-growth purge zone in order to cool exiting gas from the CNT growth zone as described above. The exiting gas is cooled to below 250° C via the rapid nitrogen purge to prevent fiber oxidation. Fibers enter the CNT growth zone where elevated temperatures heat a mixture of 95% mass flow inert gas (nitrogen) and 5% mass flow carbon containing feedstock gas (acetylene) which is introduced centrally via a gas manifold. In this example, the system length is 3 feet long with temperature in the CNT growth zone of 750° C. Catalyst laden fibers are exposed to the CNT growth environment for 180 seconds in this example, resulting in 100 micron long with a 2% volume percentage CNTs infused to the glass fiber surface. The CNT-Infused glass fibers finally pass through the post-growth purge zone which at 250°C cools the fiber as well as the exiting gas to prevent oxidation to the fiber surface and CNTs.

The CNT-infused fiber **909** is finally wound about takeup fiber spool via the fiber winder **924** for storage. CNT-infused fiber **909** is then ready for use in any of a variety of applications which require improved thermal and/or electrical conductivity, including, for example, use as the reinforcing material in EMI shielding or heat dissipative applications. Such fiber described above exhibits an electrical conductivity greater than 100 S/m.

### EXAMPLE III

This example demonstrates the CNT-Infusion of glass fiber in a continuous process for applications requiring improved tensile strength, where the system is interfaced with subsequent resin incorporation and winding process. In this case, a length CNT greater than 10 microns is desirable.

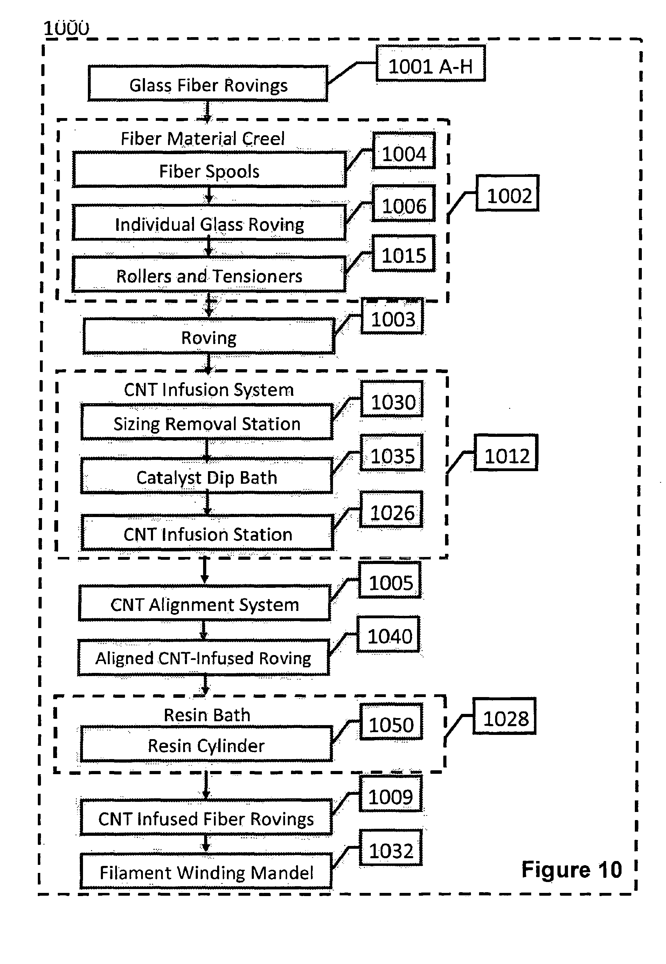

Figure 10 depicts a further illustrative embodiment of the invention wherein CNT-infused fiber is created as a sub-operation of a filament winding process being conducted via filament winding system **1000**.

System **1000** comprises glass fiber material creel **1002,** carbon nanotube infusion system **1012,** CNT alignment system **1005,** resin bath **1028,** and filament winding mandrel **1032,** interrelated as shown. The various elements of system **1000,** with the exception of carbon nanotube infusion system **1026** and CNT alignment system **1005,** are present in conventional filament winding processes. The main element of the process and system depicted in Figure 10 is the carbon nanotube infusion section **1026,** which includes (optional) sizing-removal station **1010,** and CNT-infusion station **1012.**

Fiber creel **1002** includes a plurality of spools **1004** of S-2 glass fiber material comprising one roving per spool **1001A** through **1001H.** The untwisted group of glass fiber rovings **1001A** through **1001H** is referred to collectively as "roving **1003."**

Creel **1002** holds spools **1004** in a horizontal orientation. The glass fiber roving from each spool **1006** moves through small, appropriately situated rollers and tensioners **1015** that planarize and align the direction of the fibers in a parallel arrangement as they move out of creel **1002** and toward carbon nanotube infusion system **1012** at a tension of 1-5 lbs. In this example, fibers are pulled from the creel at a linespeed of 5 ft/min.

It is understood that in some alternative embodiments, the spooled glass fiber material that is used in system **1000** is already a CNT-infused glass fiber material (*i.e.*, produced via system **800).** In such embodiments, system **1000** is operated without nanotube infusion system **1012.**

In carbon nanotube infusion system **1012,** roving **1003** sizing is removed, nanotube-forming catalyst is applied, and the roving is exposed to CNT growth conditions via the CVD growth system.

Sizing removal station **1030** exposes roving **1003** to elevated temperatures in an inert (nitrogen) atmosphere. In this example, roving **1003** is exposed to 550° C temperatures for a residence time of 30 seconds.

In this illustrative example, the catalyst solution is applied via a dip process, such as by roving **1003** through a dip bath **1035.** In this example, a catalyst solution consisting of a volumetric ratio of 1 part ferrofluid nanoparticle solution and 200 parts hexane is used. At the process linespeed for CNT-infused fiber targeted at improving tensile, the fiber will remain in the dip bath for 25 seconds. The catalyst can be applied at room temperature in the ambient environment with neither vacuum nor an inert atmosphere required.

Catalyst laden roving **1003** is then advanced to the CNT Infusion station **1026** consisting of a pre-growth cool inert gas purge zone, a CNT growth zone, and a post-growth gas purge zone. Room temperature nitrogen gas is introduced to the pre-growth purge zone in order to cool exiting gas from the CNT growth zone as described above. The exiting gas is cooled to below 250° C via the rapid nitrogen purge to prevent fiber oxidation.. Fibers enter the CNT growth zone where elevated temperatures heat a mixture of 99% mass flow inert gas (nitrogen) and 1% mass flow carbon containing feedstock gas (acetylene) which is introduced centrally via a gas manifold. In this example, the system length is 5 feet and the temperature in the CNT growth zone is 650° C. Catalyst laden fibers are exposed to the CNT growth environment for 60 seconds in this example, resulting in 15 micron long with a 4% volume percentage of CNTs infused to the glass fiber surface. The CNT-Infused glass fibers finally pass through the post-growth purge zone which at 250°C cools the fiber as well as the exiting gas to prevent oxidation to the fiber surface and CNTs.

CNT-infused roving **1003** is then passed through the CNT alignment system **1005,** where a series of dies are used to mechanically align the CNTs' axis in the direction of each roving **1001 A-H** of roving **1003.** Tapered dies ending with a 0.125 inch diameter opening is used to aid in the alignment of the CNTs.

After passing through CNT alignment system **1005,** aligned CNT-infused roving **1040** is delivered to resin bath **1028.** The resin bath contains resin for the production of a composite material comprising the CNT-infused fiber and the resin. This resin can include commercially-available resin matrices such as polyester (*e.g.*, orthophthalic polyesters, *etc.),* improved polyester (e.g., isophthalic polyesters, *etc.*), epoxy, and vinyl ester.

Resin bath **1028** can be implemented in a variety of ways, two of which are described below. First, resin bath **1028** can be implemented as a doctor blade roller bath wherein a polished rotating cylinder (*e.g.*, cylinder **1050)** that is disposed in the bath picks up resin as it turns. The doctor bar (not depicted in Figure 10) presses against the cylinder to obtain a precise resin film thickness on cylinder **1050** and pushes excess resin back into the bath. As glass fiber roving **1003** is pulled over the top of cylinder **1050,** it contacts the resin film and wets out. Alternatively, resin bath **1028** is used as an immersion bath wherein glass fiber roving **1003** is submerged into the resin and then pulled through a set of wipers or rollers that remove excess resin.

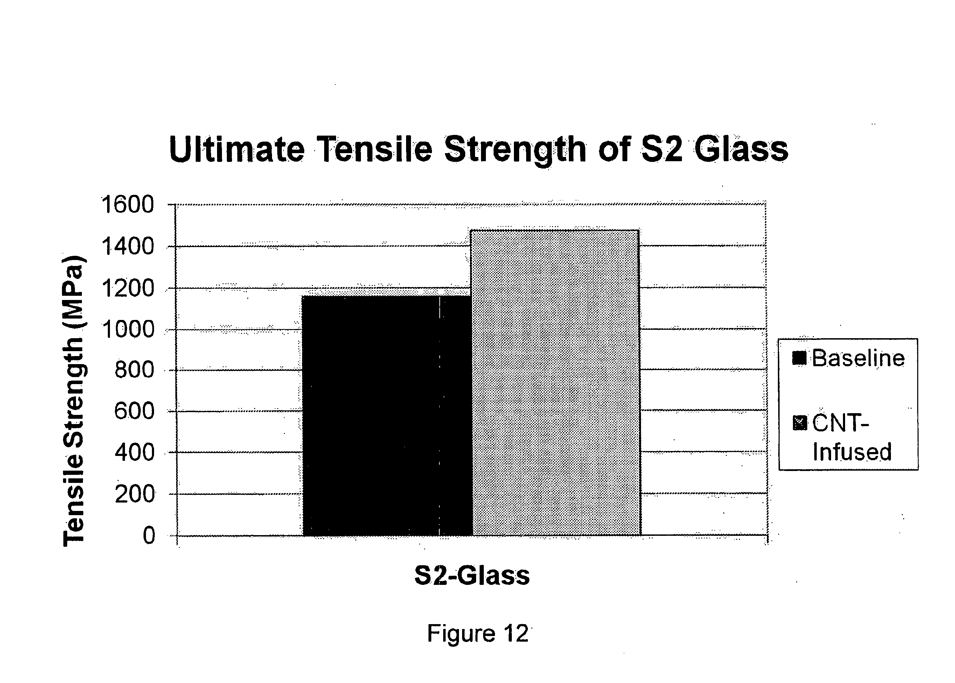

After leaving resin bath **1028,** resin-wetted, CNT-infused fiber rovings **1009** are passed through various rings, eyelets and, typically, a multi-pin "comb" (not depicted) that is disposed behind a delivery head (not depicted). The comb keeps the glass fiber rovings **1009** separate until they are brought together in a single combined band on rotating mandrel **1032**. The mandrel acts as a mold for a structure requiring composites material with improved tensile strength. Figure 12 shows the tensile strength of CNT infused S2-glass fiber compared to unfunctionalized S2 glass fiber. The unsized CNT-infused S2-glass fiber demonstrates an over 25% improvement in tensile strength over the sized S2-glass fiber baseline.

It is to be understood that the above-described embodiments are merely illustrative of the present invention and that many variations of the above-described embodiments can be devised by those skilled in the art without departing from the scope of the invention. For example, in this Specification, numerous specific details are provided in order to provide a thorough description and understanding of the illustrative embodiments of the present invention. Those skilled in the art will recognize, however, that the invention can be practiced without one or more of those details, or with other processes , materials, components, *etc*.

Furthermore, in some instances, well-known structures, materials, or operations are not shown or described in detail to avoid obscuring aspects of the illustrative embodiments.
It is understood that the various embodiments shown in the Figures are illustrative, and are not necessarily drawn to scale. Reference throughout the specification to "one embodiment" or "an embodiment" or "some embodiments" means that a particular feature, structure, material, or characteristic described in connection with the embodiment(s) is included in at least one embodiment of the present invention, but not necessarily all embodiments. Consequently, the appearances of the phrase "in one embodiment," "in an embodiment," or "in some embodiments" in various places throughout the Specification are not necessarily all referring to the same embodiment. Furthermore, the particular features, structures, materials, or characteristics can be combined in any suitable manner in one or more embodiments. It is therefore intended that such variations be included within the scope of the following claims and their equivalents.

## Claims

1. A composition comprising a carbon nanotube (CNT)-infused glass fiber material, wherein said CNT-infused glass fiber material comprises a glass fiber material of spoolable dimensions and carbon nanotubes (CNTs) bonded to said glass fiber material, wherein said CNTs are uniform in length and uniform in distribution.

2. The composition of claim 1, where said CNTs have a length of about 1 micron to about 500 microns.

3. The composition of claim 1, wherein said glass fiber material is selected from a glass filament, an optical fiber, a glass strand (tow), a glass yarn, a glass tape, a unidirectional glass tape, a glass fiber-braid, a glass roving, a glass roving fabric, a non-woven glass fiber mat, and a glass fiber ply.

4. The composition of claim 1, wherein said glass fiber material is selected from E-glass, A-glass, E-CR-glass, C-glass, D-glass, R-glass, and S-glass.

5. The composition of claim 1 further comprising a sizing agent selected from a surfactant, an anti-static agent, a lubricant, siloxanes, alkoxysilanes, aminosilanes, silanes, silanols, polyvinyl alcohol, starch, and mixtures thereof.

6. The composition of claim 1 further comprising a matrix material selected from an epoxy, a polyester, a vinylester, a polyetherimide, a polyetherketoneketone, a polyphthalamide, a polyetherketone, a polytheretherketone, a polyimide, a phenol-formaldehyde, and a bismaleimide.

7. A continuous CNT infusion process comprising:
(a) disposing a carbon-nanotube forming catalyst on a surface of a glass fiber material of spoolable dimensions; and
(b) synthesizing carbon nanotubes on said glass fiber material, thereby forming a carbon nanotube-infused glass fiber material;
wherein said continuous CNT infusion process has a material residence time of between about 5 to about 300 seconds in a CNT growth chamber.

8. The process of claim 7, wherein a material residence time of about 5 to about 30 seconds produces CNTs having a length between about 1 micron to about 10 microns.

9. The process of claim 7, wherein a material residence time of about 30 to about 180 seconds produces CNTs having a length between about 10 microns to about 100 microns.

10. The process of claim 7, wherein a material residence time of about 180 to about 300 seconds produces CNTs having a length between about 100 microns to about 500 microns.

11. The process of claim 7 further comprising:
c) synthesizing a first amount of a first type of carbon nanotube on said glass fiber material, wherein said first type of carbon nanotube is selected to alter at least one first property of said glass fiber material; and
d) synthesizing a second amount of a second type of carbon nanotube on said glass fiber material, wherein said second type of carbon nanotube is selected to alter at least one second property of said glass fiber material.

12. A continuous CNT infusion process comprising:
(a) extruding a glass fiber material from a glass melt;
(b) disposing a carbon-nanotube forming catalyst on a surface of the glass fiber material; and
(c) synthesizing carbon nanotubes on said glass fiber material, thereby forming a carbon nanotube-infused glass fiber material.

13. The process of claim 12; wherein said continuous CNT infusion process has a linespeed of between about 25 to about 100 ft/min.

14. The process of claim 7 or claim 12 further comprising applying a sizing to said carbon nanotube-infused glass fiber material.

15. The process of claim 7 or claim 12 further comprising applying a matrix material to said carbon nanotube-infused glass fiber material.

16. A process for continuous CNT infusion to a glass fiber material of spoolable dimensions comprising:
removing sizing material from a glass fiber material;
applying a carbon nanotube-forming catalyst to said glass fiber material after sizing removal;
heating said fiber to at least 500 °C; and
synthesizing carbon nanotubes on said glass fiber material.
